(19)

**Europäisches Patentamt**

**European Patent Office**

**Office européen des brevets**

(11) **EP 4 230 310 A1**

(12) **EUROPEAN PATENT APPLICATION**
published in accordance with Art. 153(4) EPC

(43) Date of publication:
23.08.2023 Bulletin 2023/34

(21) Application number: 21894720.8

(22) Date of filing: 18.11.2021

(51) International Patent Classification (IPC):
B05D 1/36 (2006.01)     B05D 3/02 (2006.01)
B05D 7/24 (2006.01)     B32B 27/30 (2006.01)
B32B 27/36 (2006.01)     B32B 27/40 (2006.01)
C09D 5/00 (2006.01)     C09D 133/00 (2006.01)
C09D 133/14 (2006.01)     C09D 167/04 (2006.01)
C09D 175/04 (2006.01)     C09D 175/06 (2006.01)
C08G 18/40 (2006.01)     C08G 18/42 (2006.01)
C08G 18/62 (2006.01)

(52) Cooperative Patent Classification (CPC):
B05D 1/36; B05D 3/02; B05D 7/24; B32B 27/30;
B32B 27/36; B32B 27/40; C08G 18/40;
C08G 18/42; C08G 18/62; C09D 5/00;
C09D 133/00; C09D 133/14; C09D 167/04;
C09D 175/04; C09D 175/06

(86) International application number:
PCT/JP2021/042432

(87) International publication number:
WO 2022/107848 (27.05.2022 Gazette 2022/21)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 18.11.2020 JP 2020191307
12.04.2021 JP 2021066840

(71) Applicant: Kansai Paint Co., Ltd
Amagasaki-shi, Hyogo 661-8555 (JP)

(72) Inventors:
• FURUYA, Daisuke
Hiratsuka-shi, Kanagawa 254-8562 (JP)
• NAKANO, Narihito
Hiratsuka-shi, Kanagawa 254-8562 (JP)

(74) Representative: Zimmermann & Partner
Patentanwälte mbB
Postfach 330 920
80069 München (DE)

(54) **COATING COMPOSITION HAVING HIGH SOLID CONTENT AND METHOD FOR FORMING MULTILAYER COATING FILM**

(57) The present invention relates to a coating composition having a high solid content, said coating composition being characterized by containing: (A) a hydroxyl group-containing acrylic resin that has a glass transition temperature (Tg) in the range of 20-70° C and a weight average molecular weight in the range of 3,000-10,000; (B) a hydroxyl group-containing polyester resin that is the reaction product of a polyfunctional compound (b1) which has a total of at least three carboxyl groups and hydroxyl groups in each molecule, a monoepoxide compound (b-2) which contains a hydrocarbon group having at least four carbon atoms, and a caprolactone compound (b-3); and (C) a polyisocyanate compound, wherein the solid content at the time of application is at least 50 mass%.

EP 4 230 310 A1

**Description**

TECHNICAL FIELD

The present invention relates to a high-solid-content coating composition and a method for forming a multilayer coating film.

BACKGROUND ART

In recent years, from a viewpoint of global environmental protection, it has been required to reduce volatile organic compounds (VOCs) emitted from coatings, and replacement of a solvent-based coating with a water-based coating has been advanced rapidly in various fields.

In coating of an automobile, a large amount of solvent-based coatings has been used previously, and it has been urgently necessary to reduce VOCs emitted from these coatings. With regard to various coatings used in undercoat, intermediate coat, and overcoat coating processes of the automobile, replacement of an organic solvent-based coating with a water-based coating has been advanced, and at present, coating with a water-based coating is mainly performed.

However, an overcoat clear coating is particularly required to have a high level of a coating film performance (such as scratch resistance, hardness, and water resistance) and a finished appearance, and thus a solvent-based clear coating is still mainly used for coating at present.

One example of a VOC reduction technique that does not rely on an aqueous clear coating is to increase a solid content (increase a solid content concentration) of a coating.

For example, Patent Literature 1 discloses a high-solid-content coating composition, in which a polyisocyanate compound and a melamine resin are used in combination with a reaction product of a specific carboxy group-containing compound and an epoxy group-containing compound, and a specific hydroxy group-containing resin is further contained.

Patent Literature 2 discloses an overcoat coating composition containing, as essential components, a vinyl-based copolymer containing a side chain having a specific group (lactone-modified hydroxy group), an alkoxy monomeric melamine, a blocked isocyanate, and a rheology control agent.

CITATION LIST

PATENT LITERATURE

Patent Literature 1: JP2002-201430A
Patent Literature 2: JP2002-020682A

SUMMARY OF INVENTION

TECHNICAL PROBLEM

However, the coating composition described in Patent Literature 1 has a high hardness, but is insufficient in scratch resistance, water resistance, and finishability.

The overcoat coating composition described in Patent Literature 2 has good scratch resistance, but is insufficient in hardness, water resistance, and finishability.

An object of the present invention is to provide a high-solid-content coating composition capable of forming a coating film excellent in hardness, scratch resistance, water resistance, and finished appearance.

SOLUTION TO PROBLEM

As a result of intensive studies to achieve the above object, the present inventors have found that the above object can be achieved by a high-solid-content coating composition, including: (A) a hydroxy group-containing acrylic resin having a glass transition temperature (Tg) in a range of 20°C to 70°C and a weight average molecular weight in a range of 3,000 to 10,000; (B) a hydroxy group-containing polyester resin being a reaction product of a polyfunctional compound (b-1) having a carboxy group and a hydroxy group in total of three or more in one molecule, a monoepoxide compound (b-2) having a hydrocarbon group having 4 or more carbon atoms, and a caprolactone compound (b-3); and (C) a polyisocyanate compound, in which a solid content at the time of coating is 50 mass% or more.

According to the present invention, a high-solid-content coating composition including the following aspects is provided.

Item 1: A high-solid-content coating composition, including: (A) a hydroxy group-containing acrylic resin having a glass transition temperature (Tg) in a range of 20°C to 70°C and a weight average molecular weight in a range of 3,000 to 10,000; (B) a hydroxy group-containing polyester resin being a reaction product of a polyfunctional compound (b-1) having a carboxy group and a hydroxy group in total of three or more in one molecule, a monoepoxide compound (b-2) having a hydrocarbon group having 4 or more carbon atoms, and a caprolactone compound (b-3); and (C) a polyisocyanate compound, in which a solid content at the time of coating is 50 mass% or more.

Item 2: The high-solid-content coating composition according to item 1, in which the hydroxy group-containing acrylic resin (A) includes a hydroxy group-containing acrylic resin (A') having an alkoxysilyl group.

Item 3: The high-solid-content coating composition according to item 1 or 2, in which an acid value of the hydroxy group-containing polyester resin (B) is 30 mgKOH/g or less.

Item 4: The high-solid-content coating composition according to any one of items 1 to 3, in which the polyfunctional compound (b-1) having a carboxy group and a hydroxy group in total of three or more is a compound having one carboxy group and two hydroxy groups.

Item 5: The high-solid-content coating composition according to any one of items 1 to 4, in which the hydroxy group-containing polyester resin (B) further contains a polybasic acid compound (b-4) as a reaction component.

Item 6: A method for forming a multilayer coating film, the method including:

a step (1): coating an object to be coated with an intermediate coating composition to form an intermediate coating film;

a step (2): coating the intermediate coating film formed in the step (1) with a basecoat coating composition to form a basecoat coating film;

a step (3): coating the basecoat coating film formed in the step (2) with the high-solid-content coating composition according to any one of items 1 to 5 to form a clearcoat coating film; and

a step (4): heating and curing the intermediate coating film, the basecoat coating film, and the clearcoat coating film formed in the steps (1) to (3) at once.

ADVANTAGEOUS EFFECTS OF INVENTION

The high-solid-content coating composition according to the present invention can form a coating film excellent in hardness, scratch resistance, water resistance, and finished appearance.

DESCRIPTION OF EMBODIMENTS

Hereinafter, the high-solid-content coating composition according to the present invention (hereinafter, may be abbreviated as a "present coating") will be described in more detail.

The high-solid-content coating composition according to the present invention is a high-solid-content coating composition, including: (A) a hydroxy group-containing acrylic resin having a glass transition temperature (Tg) in a range of 20°C to 70°C and a weight average molecular weight in a range of 3,000 to 10,000; (B) a hydroxy group-containing polyester resin being a reaction product of a polyfunctional compound (b-1) having a carboxy group and a hydroxy group in total of three or more in one molecule, a monoepoxide compound (b-2) having a hydrocarbon group having 4 or more carbon atoms, and a caprolactone compound (b-3); and (C) a polyisocyanate compound, in which a solid content at the time of coating is 50% or more.

In the present description, the high-solid-content coating composition means a coating composition having a solid content at the time of coating of 50 mass% or more.

<Hydroxy Group-Containing Acrylic Resin (A)>

The hydroxy group-containing acrylic resin (A) is an acrylic resin having a glass transition temperature (Tg) in a range of 20°C to 70°C and a weight average molecular weight in a range of 3,000 to 10,000.

When the glass transition temperature (Tg) of the hydroxy group-containing acrylic resin (A) is 20°C or more, a hardness and scratch resistance of a coating film to be formed are good, and when the glass transition temperature (Tg) is 70°C or less, a finished appearance of the coating film to be formed is good. Among these, the glass transition temperature (Tg) of the hydroxy group-containing acrylic resin (A) is preferably in a range of 25°C to 65°C, and more preferably in a range of 30°C to 60°C, from viewpoints of the hardness, the scratch resistance, and the finished appearance of the coating film to be formed.

In the present description, a glass transition temperature (Tg) of an acrylic resin was calculated by the following equation.

$$1/Tg(K) = (W1/T1) + (W2/T2) + ..... \quad (1)$$

$$Tg\ (°C) = Tg(K) - 273 \qquad (2)$$

In each equation, W1, W2,...represent respective mass fractions of monomers used in copolymerization, and T1, T2,...represent Tg(K) of homopolymers of respective monomers.

T1, T2, ... are values according to Polymer Hand Book (Second Edition, edited by J. Brandup and E. H. Immergut) III-139 to 179. The glass transition temperature (Tg) in a case where Tg of a homopolymer of a monomer was not clear was defined as a static glass transition temperature, and for example, a differential scanning calorimeter "DSC-220U" (manufactured by Seiko Instruments Inc.) was used, a sample was taken into a measurement cup, a solvent was completely removed by vacuum suction, and then a change in a heat amount was measured in a range of -20°C to +200°C at a heating rate of 3°C/min, and a change point of an initial base line on a low temperature side was defined as the static glass transition temperature.

When the weight average molecular weight of the hydroxy group-containing acrylic resin (A) is 3,000 or more, the hardness and the scratch resistance of the coating film to be formed are good, and when the weight average molecular weight is 10,000 or less, the finished appearance of the coating film to be formed is good. Among these, the weight average molecular weight of the hydroxy group-containing acrylic resin (A) is preferably in a range of 3,500 to 9,500, and more preferably in a range of 4,000 to 9,000, from the viewpoints of the hardness, the scratch resistance, and the finished appearance of the coating film to be formed.

In the present description, an average molecular weight is a value calculated based on a molecular weight of standard polystyrene according to a chromatogram measured by gel permeation chromatography. "HLC 8120 GPC" (manufactured by Tosoh Corporation) was used as the gel permeation chromatography. The measurement was performed under the following conditions: four columns: "TSKgel G-4000 HXL", "TSKgel G-3000 HXL", "TSKgel G-2500 HXL", and "TSKgel G-2000 HXL" (all manufactured by Tosoh Corporation, trade name); mobile phase: tetrahydrofuran; measurement temperature: 40°C; flow rate: 1 cc/min; and detector: RI.

The hydroxy group-containing acrylic resin (A) can be obtained, for example, by copolymerizing a hydroxy group-containing polymerizable unsaturated monomer and other polymerizable unsaturated monomers (polymerizable unsaturated monomers other than the hydroxy group-containing polymerizable unsaturated monomer).

The hydroxy group-containing polymerizable unsaturated monomer is a compound having one or more hydroxy groups and one or more polymerizable unsaturated bonds in one molecule. Examples of the hydroxy group-containing polymerizable unsaturated monomer include monoester products of (meth)acrylic acid and a dihydric alcohol having 2 to 8 carbon atoms, such as 2-hydroxyethyl(meth)acrylate, 2-hydroxypropyl(meth)acrylate, 3-hydroxypropyl(meth)acrylate, and 4-hydroxybutyl(meth)acrylate; ε-caprolactone modified products of the monoester products of the (meth)acrylic acid and the dihydric alcohol having 2 to 8 carbon atoms; adducts of (meth)acrylic acid and an epoxy group-containing compound (for example, "Cardura E10P" (trade name) manufactured by Momentive Specialty Chemicals Inc., neodecanoic acid glycidyl ester); N-hydroxymethyl(meth)acrylamide; allyl alcohol; and (meth)acrylate having a polyoxyethylene chain whose molecular end is a hydroxy group.

As the hydroxy group-containing polymerizable unsaturated monomer, it is preferable to use a secondary hydroxy group-containing polymerizable unsaturated monomer from viewpoints of a pot life of the present coating, the finished appearance of the coating film to be formed, and the like.

Examples of the secondary hydroxy group-containing polymerizable unsaturated monomer include polymerizable unsaturated monomers having a secondary hydroxy group and having 2 to 8, preferably 3 to 6, and more preferably 3 or 4 carbon atoms in an alkyl group of an ester moiety, such as 2-hydroxypropyl(meth)acrylate, 2-hydroxybutyl(meth)acrylate, and 3-hydroxybutyl(meth)acrylate; and adducts of (meth)acrylic acid and an epoxy group-containing compound (for example, "Cardura E10P" (trade name) manufactured by Momentive Specialty Chemicals Inc., neodecanoic acid glycidyl ester). These monomers may be used alone or in combination of two or more thereof. Among these, 2-hydroxypropyl(meth)acrylate may be suitably used from the viewpoints of the pot life of the present coating, the finished appearance of the coating film to be formed, and the like.

As the other polymerizable monomers copolymerizable with the hydroxy group-containing polymerizable unsaturated monomer, for example, monomers shown in the following (1) to (6) may be used. These polymerizable unsaturated monomers may be used alone or in combination of two or more thereof.

(1) Acid Group-Containing Polymerizable Unsaturated Monomer

The acid group-containing polymerizable unsaturated monomer is a compound having one or more acid groups and one or more polymerizable unsaturated bonds in one molecule. Examples of the monomer include carboxy group-containing monomers such as (meth)acrylic acid, crotonic acid, itaconic acid, maleic acid, and maleic anhydride; sulfonic acid group-containing monomers such as vinyl sulfonic acid and 2-sulfoethyl(meth)acrylate; and acidic phosphate-based monomers such as 2-(meth)acryloyloxyethyl acid phosphate, 2-(meth)acryloyloxypropyl acid phosphate, 2-(meth)acryloyloxy-3-chloropropyl acid phosphate, and 2-methacryloyloxyethyl phenyl phosphate. These monomers may be used alone or may be used two or more thereof. When the acid group-containing polymerizable unsaturated monomer is used, an acid value of the hydroxy group-containing acrylic resin (A) is preferably 0.5 mgKOH/g to 30 mgKOH/g, and particularly 1 mgKOH/g to 20 mgKOH/g.

(2) Esterified Product of Acrylic Acid or Methacrylic Acid and Monohydric Alcohol Having 1 to 20 Carbon Atoms

Specific examples thereof include methyl(meth)acrylate, ethyl(meth)acrylate, propyl(meth)acrylate, n-butyl(meth)acrylate, isobutyl(meth)acrylate, tert-butyl(meth)acrylate, 2-ethylhexyl(meth)acrylate, isooctyl(meth)acrylate, isomyristyl(meth)acrylate, steallyl(meth)acrylate, isostearyl acrylate (manufactured by Osaka Organic Chemical Industry Ltd, trade name), lauryl(meth)acrylate, tridecyl(meth)acrylate, tetrahydrofurfuryl(meth)acrylate, cyclohexyl(meth)acrylate, and isobornyl(meth)acrylate.

(3) Aromatic-based Vinyl Monomer

Specific examples thereof include styrene, α-methylstyrene, and vinyl toluene.
By using an aromatic-based vinyl monomer as a constituent component, a glass transition temperature of an obtained resin can be increased, and a hydrophobic coating film having a high refractive index can be obtained, and thus it is possible to obtain an effect of improving a finished appearance by improving gloss of the coating film.
When the aromatic-based vinyl monomer is used as a constituent component, a mixing ratio thereof is preferably in a range of 3 mass% to 50 mass%, and particularly 5 mass% to 40 mass% with respect to a total amount of monomer components.

(4) Glycidyl Group-Containing Polymerizable Unsaturated Monomer

A glycidyl group-containing polymerizable unsaturated monomer is a compound having one or more glycidyl groups and one or more polymerizable unsaturated bonds in one molecule, and specific examples thereof include glycidyl acrylate and glycidyl methacrylate.

(5) Polymerizable Unsaturated Bond-Containing Nitrogen Atom-Containing Compound

Examples thereof include (meth)acrylamide, N,N-dimethyl(meth)acrylamide, N-[3-(dimethylamino)propyl] (meth)acrylamide, N-butoxy methyl(meth)acrylamide, diacetone(meth)acrylamide, N,N-dimethylamino ethyl(meth)acrylate, vinyl pyridine, vinyl imidazole, acrylonitrile, and methacrylonitrile.

(6) Other Vinyl Compounds

Examples thereof include vinyl acetate, vinyl propionate, vinyl chloride, and vinyl versatate. Examples of the vinyl versatate include commercially available products such as "VeoVa 9" and "VeoVa 10" (both trade names, manufactured by Japan Epoxy Resins Co., Ltd.).
As the other polymerizable unsaturated monomers, the monomers shown in the above (1) to (6) may be used alone or may be used two or more thereof.
In the present invention, the polymerizable unsaturated monomer refers to a monomer having one or more (for example, 1 to 4) polymerizable unsaturated groups. The polymerizable unsaturated group means an unsaturated group capable of undergoing radical polymerization. Examples of such a polymerizable unsaturated group include a vinyl group, a (meth)acryloyl group, a (meth)acrylamide group, a vinyl ether group, an allyl group, a propenyl group, an isopropenyl group, and a maleimide group.
In the present description, the term "(meth)acrylate" means acrylate or methacrylate. The term "(meth)acrylic acid" means acrylic acid or methacrylic acid. The term "(meth)acryloyl" means acryloyl or methacryloyl. The term "(meth)acrylamide" means acrylamide or methacrylamide.
In production of the hydroxy group-containing acrylic resin (A), an amount of the hydroxy group-containing polymerizable unsaturated monomer used is preferably in a range of 15 mass% to 50 mass%, and more preferably 20 mass% to 40 mass%, with respect to a total amount of copolymerizable monomer components, from viewpoints of the water resistance and the finished appearance of the coating film to be formed and the like.
A hydroxy value of the hydroxy group-containing acrylic resin (A) is preferably in a range of 50 mgKOH/g to 210 mgKOH/g, particularly 80 mgKOH/g to 200 mgKOH/g, and more particularly 100 mgKOH/g to 190 mgKOH/g, from the viewpoints of the water resistance and the finished appearance of the coating film to be formed and the like.

As a copolymerization method for obtaining the hydroxy group-containing acrylic resin (A) by copolymerizing the polymerizable unsaturated monomer mixture, a solution polymerization method in which polymerization is performed in an organic solvent in the presence of a polymerization initiator may be suitably used.

Examples of the organic solvent used in the solution polymerization method include aromatic-based solvents such as toluene, xylene, and "Swasol 1000" (manufactured by Cosmo Oil Co., Ltd, trade name, high boiling point petroleum-based solvent); ester-based solvents such as ethyl acetate, butyl acetate, propyl propionate, butyl propionate, 1-methoxy-2-propyl acetate, 2-ethoxyethyl propionate, 3-methoxybutyl acetate, ethylene glycol ethyl ether acetate, and propylene glycol methyl ether acetate; ketone-based solvents such as methyl ethyl ketone, methyl isobutyl ketone, and methyl amyl ketone; and alcohol-based solvents such as isopropanol, n-butanol, isobutanol, and 2-ethylhexanol.

These organic solvents may be used alone or in combination of two or more thereof, but from a viewpoint of solubility of the acrylic resin, it is preferable to use an ester-based solvent or a ketone-based solvent. Further, an aromatic-based solvent may be suitably used in combination.

Examples of the polymerization initiator that may be used in the copolymerization of the hydroxy group-containing acrylic resin (A) include known radical polymerization initiators such as 2,2'-azobisisobutyronitrile, benzoyl peroxide, di-t-butyl peroxide, di-t-amyl peroxide, t-butyl peroctoate, 2,2'-azo bis(2-methylbutylonitrile), and 2,2'-azo bis(2,4-dimethylvaleronitrile).

The hydroxy group-containing acrylic resin (A) may be used alone or in combination of two or more thereof.

A content of the hydroxy group-containing acrylic resin (A) in the high-solid-content coating composition according to the present invention is preferably in a range of 20 parts by mass to 60 parts by mass, more preferably 25 parts by mass to 55 parts by mass, and still more preferably 30 parts by mass to 50 parts by mass, based on 100 parts by mass of a resin solid content of the high-solid-content coating composition, from the viewpoints of the hardness, the scratch resistance, the water resistance, and the finished appearance of the coating film to be formed and the like.

As another aspect of the hydroxy group-containing acrylic resin (A), a hydroxy group-containing acrylic resin (A') having an alkoxysilyl group may be suitably used, from the viewpoints of the hardness, the scratch resistance, the water resistance, and the finished appearance of the coating film to be formed and the like.

<Hydroxy Group-Containing Acrylic Resin (A') Having Alkoxysilyl Group>

The hydroxy group-containing acrylic resin (A') having an alkoxysilyl group is a resin having one or more alkoxysilyl groups and one or more hydroxy groups in one molecule.

By using the hydroxy group-containing acrylic resin (A') having an alkoxysilyl group, a crosslinking bond is formed with a condensation reaction between alkoxysilyl groups and a reaction between an alkoxysilyl group and a hydroxy group, and thus the hardness and the scratch resistance of the coating film to be formed can be improved.

Examples of an alkoxy moiety of the alkoxysilyl group contained in the hydroxy group-containing acrylic resin (A') having an alkoxysilyl group include alkoxy moieties having about 1 to 6 carbon atoms, and preferably about 1 to 3 carbon atoms, such as methoxy, ethoxy, and propoxy. As the alkoxy moiety, methoxy and ethoxy are more preferred, and methoxy is particularly preferred, from the viewpoints of the hardness and the scratch resistance of the coating film to be formed and the like.

Examples of the alkoxysilyl group include a trialkoxysilyl group, a dialkoxysilyl group, and a monoalkoxysilyl group. As the alkoxysilyl group, a trialkoxysilyl group is preferred from the viewpoint of the scratch resistance of the coating film to be formed and the like.

When the alkoxysilyl group is a dialkoxysilyl group and a monoalkoxysilyl group, examples of a group other than alkoxy bonded to a silicon atom include alkyl having about 1 to 6 carbon atoms, and preferably about 1 to 3 carbon atoms (for example, methyl, ethyl, and propyl).

The hydroxy group-containing acrylic resin (A') having an alkoxysilyl group can be obtained, for example, by using the hydroxy group-containing polymerizable unsaturated monomer and an alkoxysilyl group-containing polymerizable unsaturated monomer as one of the other polymerizable unsaturated monomers in a method for producing the hydroxy group-containing acrylic resin (A).

As the hydroxy group-containing polymerizable unsaturated monomer, it is preferable to use a primary hydroxy group-containing polymerizable unsaturated monomer from the viewpoints of the hardness, the scratch resistance, the water resistance, and the finished appearance of the coating film to be formed and the like.

Examples of the primary hydroxy group-containing polymerizable unsaturated monomer include polymerizable unsaturated monomers having a primary hydroxy group and having 2 to 8, preferably 2 to 6, and more preferably 2 to 4 carbon atoms in an alkyl group of an ester moiety, such as 2-hydroxyethyl(meth)acrylate, 3-hydroxypropyl(meth)acrylate, and 4-hydroxybutyl(meth)acrylate. These monomers may be used alone or in combination of two or more thereof.

A hydroxy value of the hydroxy group-containing acrylic resin (A') having an alkoxysilyl group is preferably in a range of 50 mgKOH/g to 210 mgKOH/g, particularly 80 mgKOH/g to 200 mgKOH/g, and more particularly 100 mgKOH/g to 190 mgKOH/g, from the viewpoints of the water resistance and the finished appearance of the coating film to be formed and the like.

The alkoxysilyl group-containing polymerizable unsaturated monomer is a compound having one or more alkoxysilyl groups and one or more polymerizable unsaturated bonds in one molecule. Examples of the alkoxysilyl group-containing polymerizable unsaturated monomer include vinyltrimethoxysilane, vinyltriethoxysilane, acryloxyethyltrimethoxysilane, methacryloxyethyltrimethoxysilane, acryloxypropyltrimethoxysilane, methacryloxypropyltrimethoxysilane, acryloxypropyltriethoxysilane, methacryloxypropyltriethoxysilane, and vinyltris(P-methoxyethoxy)silane.

As the alkoxysilyl group-containing polymerizable unsaturated monomer, from the viewpoint of the scratch resistance of the coating film to be formed and the like, vinyltrimethoxysilane, γ-acryloxypropyltrimethoxysilane, and γ-methacryloxypropyltrimethoxysilane are preferred, and γ-methacryloxypropyltrimethoxysilane is more preferred.

As the alkoxysilyl group-containing polymerizable unsaturated monomer, a commercially available product may be used. Examples thereof include KBM-1003, KBE-1003, KBM-502, KBM-503, KBE-502, KBE-503, KBM-5103, and KBM-5803 (all manufactured by Shin-Etsu Chemical Co., Ltd.); Y-9936 and A-174 (manufactured by Momentive Performance Materials Japan LLC); and OFS-6030 and Z-6033 (manufactured by Dow Coming Toray Co., Ltd.).

The alkoxysilyl group-containing polymerizable unsaturated monomer may be used alone or in combination of two or more thereof.

In production of the hydroxy group-containing acrylic resin (A') having an alkoxysilyl group, an amount of the alkoxysilyl group-containing polymerizable unsaturated monomer used is preferably in a range of 3 mass% to 50 mass%, more preferably 10 mass% to 45 mass%, and still more preferably 20 mass% to 40 mass%, with respect to a total amount of copolymerizable monomer components, from the viewpoints of the hardness, the scratch resistance, the water resistance, and the finished appearance of the coating film to be formed and the like.

As one aspect of the hydroxy group-containing acrylic resin (A), when the hydroxy group-containing acrylic resin (A') having an alkoxysilyl group is contained, a content ratio of the hydroxy group-containing acrylic resin (A') having an alkoxysilyl group in the hydroxy group-containing acrylic resin (A) is preferably in a range of 50 mass% to 100 mass%, more preferably 55 mass% to 100 mass%, and still more preferably 60 mass% to 100 mass%, from the viewpoints of the hardness, the scratch resistance, the water resistance, and the finished appearance of the coating film to be formed and the like.

<Hydroxy Group-Containing Polyester Resin (B)>

The hydroxy group-containing polyester resin (B) is a polyester resin which is a reaction product of a polyfunctional compound (b-1) having a carboxy group and a hydroxy group in total of three or more in one molecule, a monoepoxide compound (b-2) having a hydrocarbon group having 4 or more carbon atoms, and a caprolactone compound (b-3).

<Compound (b-1)>

The compound (b-1) is a compound having a carboxy group and a hydroxy group in total of three or more in one molecule.

When the hydroxy group-containing polyester resin (B) contains the compound (b-1) as a reaction component, the coating film to be formed has an excellent finished appearance.

Examples of the compound (b-1) include the following compounds (1) to (4).

(1) Compounds having one hydroxy group and two carboxy groups in one molecule: malic acid and the like.
(2) Compounds having one hydroxy group and three carboxy groups in one molecule: citric acid and the like.
(3) Compounds having two hydroxy groups and two carboxy groups in one molecule: tartaric acid and the like.
(4) Compounds having two hydroxy groups and one carboxy group in one molecule: dimethylol propionic acid, dimethylol butanoic acid, and the like.

Among these compounds (b-1), from the viewpoint of the finished appearance of the coating film to be formed and the like, it is preferable to use a compound having two hydroxy groups and one carboxy group in one molecule.

The compound (b-1) may be used alone or in combination of two or more thereof.

In production of the hydroxy group-containing polyester resin (B), an amount of the compound (b-1) used is preferably in a range of 3 mass% to 40 mass%, and more preferably 5 mass% to 30 mass%, with respect to a total amount of reaction components, from the viewpoint of the finished appearance of the coating film to be formed and the like.

<Compound (b-2)>

The compound (b-2) is a monoepoxide compound having a hydrocarbon group having 4 or more carbon atoms.
When the hydroxy group-containing polyester resin (B) contains the compound (b-2) as a reaction component, the coating film to be formed has an excellent water resistance.
Examples of the compound (b-2) include: glycidyl esters of aliphatic carboxylic acids such as glycidyl pivalate, glycidyl hexanoate, glycidyl cyclohexane carboxylate, glycidyl 2-ethylhexanoate, glycidyl isononanoate, glycidyl decanoate, glycidyl undecanoate, glycidyl laurate, glycidyl myristate, glycidyl palmitate, glycidyl stearate, and "Cardura E10P" (trade name, manufactured by Momentive Specialty Chemicals Inc., neodecanoic acid monoglycidyl ester); alkyl glycidyl ethers such as butyl glycidyl ether and decyl glycidyl ether; aryl glycidyl ethers such as phenyl glycidyl ether; and α-olefin monoepoxides such as styrene oxide, and AOEX24 (manufactured by Daicel Chemical Industries, Ltd, α-olefin monoepoxide mixture). Among these, from the viewpoint of the water resistance of the coating film to be formed, it is preferable to use a glycidyl ester of an aliphatic carboxylic acid, and it is more preferable to use "Cardura E10P" (trade name, manufactured by Momentive Specialty Chemicals Inc., neodecanoic acid monoglycidyl ester).
The hydrocarbon group having 4 or more carbon atoms may have a substituent such as a hydroxy group, and specific examples of the monoepoxide compound having a hydrocarbon group having such a substituent include 1,2-epoxyoctanol and hydroxyoctyl glycidyl ether.
The compound (b-2) may be used alone or in combination of two or more thereof.
In the production of the hydroxy group-containing polyester resin (B), an amount of the compound (b-2) used is preferably in a range of 10 mass% to 70 mass%, and more preferably 20 mass% to 60 mass%, with respect to the total amount of the reaction components, from the viewpoint of the water resistance of the coating film to be formed and the like.

<Compound (b-3)>

The compound (b-3) is a caprolactone compound.
When the hydroxy group-containing polyester resin (B) contains the compound (b-3) as a reaction component, the coating film to be formed has an excellent scratch resistance and water resistance.
Examples of the compound (b-3) include γ-caprolactone, ε-caprolactone, δ-caprolactone, lactone, and valerolactone, and among these, ε-caprolactone is suitable from the viewpoints of the scratch resistance and the water resistance of the coating film to be formed.
The compound (b-3) may be used alone or in combination of two or more thereof.
In the production of the hydroxy group-containing polyester resin (B), an amount of the compound (b-3) used is preferably in a range of 5 mass% to 60 mass%, and more preferably 10 mass% to 50 mass%, with respect to the total amount of the reaction components, from the viewpoints of the scratch resistance and the water resistance of the coating film to be formed and the like.
The hydroxy group-containing polyester resin (B) may be produced with a known method such as a melt polycondensation method or a solution polycondensation method.
In the production of the hydroxy group-containing polyester resin (B), a polybasic acid compound (b-4) and/or a polyhydric alcohol compound (b-5) may also be used. However, in the present invention, a compound corresponding to the compound (b-1) is to be defined as the compound (b-1), and is to be excluded from the compound (b-4) and the compound (b-5).

<Compound (b-4)>

The compound (b-4) is a compound having two or more carboxy groups in one molecule.
Examples of the compound (b-4) include: aromatic polybasic acids such as terephthalic acid, isophthalic acid, phthalic acid, naphthalene dicarboxylic acid, 4,4'-biphenyl dicarboxylic acid, and diphenylmethane-4,4'-dicarboxylic acid, and anhydrides thereof; alicyclic dicarboxylic acids such as hexahydroisophthalic acid, hexahydroterephthalic acid, hexahydrophthalic acid, and tetrahydrophthalic acid, and anhydrides thereof; aliphatic polybasic acids such as adipic acid, sebacic acid, suberic acid, succinic acid, glutaric acid, maleic acid, chloromaleic acid, fumaric acid, dodecanedioic acid, pimelic acid, azelaic acid, itaconic acid, citraconic acid, and dimer acid, and anhydrides thereof; lower alkyl esters such as methyl esters and ethyl esters of these dicarboxylic acids; and trihydric or higher polybasic acids such as trimellitic acid, trimellitic anhydride, pyromellitic acid, pyromellitic anhydride, trimesic acid, methylcyclohexene tricarboxylic acid, and tetrachlorohexene polybasic acid, and anhydrides thereof. Among these, it is preferable to use an alicyclic dicarboxylic acid and an anhydride thereof.
The compound (b-4) may be used alone or in combination of two or more.
When the compound (b-4) is used in the production of the hydroxy group-containing polyester resin (B), an amount of the compound (b-4) used is preferably in a range of 5 mass% to 30 mass%, and more preferably 10 mass% to 25 mass%, with respect to the total amount of the reaction components, from the viewpoint of the finished appearance of the coating film to be formed and the like.

<Compound (b-5)>

The compound (b-5) is a compound having two or more hydroxy groups in one molecule.
Examples of the compound (b-5) include: dihydric alcohols such as ethylene glycol, propylene glycol, diethylene glycol, trimethylene glycol, tetraethylene glycol, triethylene glycol, dipropylene glycol, 1,4-butanediol, 1,3-butanediol, 2,3-butanediol, 1,2-butanediol, 3-methyl-1,2-butanediol, 1,2-pentanediol, 1,5-pentanediol, 1,4-pentanediol, 2,4-pentanediol, 2,3-dimethyltrimethylene glycol, tetramethylene glycol, 3-methyl-4,3-pentanediol, 3-methyl-4,5-pentanediol, 2,2,4-trimethyl-1,3-pentanediol, 1,6-hexanediol, 1,5-hexanediol, 1,4-hexanediol, 2,5-hexanediol, neopentyl glycol, and hydroxypivalic acid neopentyl glycol ester; ester diols such as bis(hydroxyethyl)terephthalate; polyether diols such as alkylene oxide adducts of bisphenol A, polyethylene glycol, polypropylene glycol, and polybutylene glycol; trihydric or higher alcohols such as glycerin, trimethylolpropane, trimethylolethane, diglycerin, triglycerin, 1,2,6-hexanetriol, pentaerythritol, dipentaerythritol, sorbitol, and mannitol; alicyclic polyhydric alcohols such as 1,4-cyclohexanedimethanol, tricyclodecanedimethanol, hydrogenated bisphenol A, hydrogenated bisphenol F, hydrogenated bisphenol A, and hydrogenated bisphenol F; and cyclic polyol compounds having a nurate structure such as tris(hydroxyalkyl)isocyanurate and tris(hydroxyethyl)isocyanurate.
The compound (b-5) may be used alone or in combination of two or more thereof.
When the compound (b-5) is used in the production of the hydroxy group-containing polyester resin (B), an amount of the compound (b-5) used is preferably in a range of 3 mass% to 20 mass%, and more preferably 5 mass% to 15 mass%, with respect to the total amount of the reaction components, from the viewpoint of the water resistance of the coating film to be formed and the like.
An acid value of the hydroxy group-containing polyester resin (B) is preferably 30 mgKOH/g or less, more preferably 24 mgKOH/g or less, and still more preferably 18 mgKOH/g or less, from the viewpoints of the water resistance and the finished appearance of the coating film to be formed and the like.
A hydroxy value of the hydroxy group-containing polyester resin (B) is preferably in a range of 50 mgKOH/g to 250 mgKOH/g, and more preferably in a range of 80 mgKOH/g to 200 mgKOH/g, from the viewpoint of the scratch resistance of the coating film to be formed and the like.
A number average molecular weight of the hydroxy group-containing polyester resin (B) is preferably in a range of 500 to 5,000, and more preferably in a range of 1,000 to 3,500, from the viewpoints of the water resistance and the finished appearance of the coating film to be formed and the like.
A content of the hydroxy group-containing polyester resin (B) in the high-solid-content coating composition according to the present invention is preferably in a range of 1 part by mass to 30 parts by mass, more preferably 2 parts by mass to 25 parts by mass, and still more preferably 3 parts by mass to 20 parts by mass, based on 100 parts by mass of the resin solid content of the high-solid-content coating composition, from the viewpoints of the hardness, the scratch resistance, the water resistance, and the finished appearance of the coating film to be formed and the like.

<Polyisocyanate Compound (C)>

The polyisocyanate compound (C) is a compound having at least two isocyanate groups in one molecule, and examples thereof include aliphatic polyisocyanate compounds, alicyclic polyisocyanate compounds, aromatic aliphatic polyisocyanate compounds, aromatic polyisocyanate compounds, and derivatives of these polyisocyanate compounds.
Examples of the aliphatic polyisocyanate compound include aliphatic diisocyanate compounds such as trimethylene diisocyanate, tetramethylene diisocyanate, hexamethylene diisocyanate, pentamethylene diisocyanate, 1,2-propylene diisocyanate, 1,2-butylene diisocyanate, 2,3-butylene diisocyanate, 1,3-butylene diisocyanate, 2,4,4- or 2,2,4-trimethylhexamethylene diisocyanate, dimer acid diisocyanate, and methyl 2,6-diisocyanatohexanoate (common name: lysine diisocyanate); and aliphatic triisocyanate compounds such as 2,6-diisocyanatohexanoic acid 2-isocyanatoethyl, 1,6-diisocyanato-3-isocyanatomethyl hexane, 1,4,8-triisocyanatooctane, 1,6,11-triisocyanatoundecane, 1,8-diisocyanato-4-isocyanatomethyloctane, 1,3,6-triisocyanatohexane, and 2,5,7-trimethyl-1,8-diisocyanato-5-isocyanatomethyloctane.
Examples of the alicyclic polyisocyanate compound include alicyclic diisocyanate compounds such as 1,3-cyclopentene diisocyanate, 1,4-cyclohexane diisocyanate, 1,3-cyclohexane diisocyanate, 3-isocyanatomethyl-3,5,5-trimethylcyclohexyl isocyanate (common name: isophorone diisocyanate), 4-methyl-1,3-cyclohexylene diisocyanate (common name: hydrogenated TDI), 2-methyl-1,3-cyclohexylene diisocyanate, 1,3- or 1,4-bis(isocyanatomethyl)cyclohexane (common name: hydrogenated xylylene diisocyanate) or a mixture thereof, methylenebis(4,1-cyclohexanediyl)diisocyanate (common name: hydrogenated MDI), and norbornane diisocyanate; and alicyclic triisocyanate compounds such as 1,3,5-triisocyanatocyclohexane, 1,3,5-trimethylisocyanatocyclohexane, 2-(3 -isocyanatopropyl)-2,5 - di(isocyanatomethyl)-bicyclo(2.2.1)heptane, 2-(3-isocyanatopropyl)-2,6-di(isocyanatomethyl)-bicyclo(2.2.1)heptane, 3-(3-isocyanatopropyl)-2,5-di(isocyanatomethyl)-bicyclo(2.2.1)heptane, 5-(2-isocyanatoethyl)-2-isocyanatomethyl-3-(3-isocyanatopropyl)-bicyclo(2.2.1)heptane, 6-(2-isocyanatoethyl)-2-isocyanatomethyl-3-(3-isocyanatopropyl)-bicyclo(2.2.1)heptane, 5-(2-isocyanatoethyl)-2-isocyanatomethyl-2-(3-isocyanatopropyl)-bicyclo(2.2.1)-heptane, and 6-(2-isocyanatoethyl)-2-isocyanatomethyl-2-(3-isocyanatopropyl)-bicyclo(2.2.1)heptane.

Examples of the aromatic aliphatic polyisocyanate compound include aromatic aliphatic diisocyanate compounds such as methylenebis(4,1-phenylene)diisocyanate (common name: MDI), 1,3- or 1,4-xylylene diisocyanate or a mixture thereof, ω,ω'-diisocyanato-1,4-diethylbenzene, and 1,3- or 1,4-bis(1-isocyanato-1-methylethyl)benzene (common name: tetramethylxylylene diisocyanate) or a mixture thereof; and aromatic aliphatic triisocyanate compounds such as 1,3,5-triisocyanatomethylbenzene.

Examples of the aromatic polyisocyanate compound include aromatic diisocyanate compounds such as m-phenylene diisocyanate, p-phenylene diisocyanate, 4,4'-diphenyl diisocyanate, 1,5-naphthalene diisocyanate, 2,4-tolylene diisocyanate (common name: 2,4-TDI) or 2,6-tolylene diisocyanate (common name: 2,6-TDI) or a mixture thereof, 4,4'-toluidine diisocyanate, and 4,4'-diphenyl ether diisocyanate; aromatic triisocyanate compounds such as triphenylmethane-4,4',4"-triisocyanate, 1,3,5-triisocyanatebenzene, and 2,4,6-triisocyanatetoluene; and aromatic tetraisocyanate compounds such as 4,4'-diphenylmethane-2,2',5,5'-tetraisocyanate.

Examples of the derivative of the polyisocyanate compound include a dimer, a trimer, a biuret, an allophanate, a uretdione, a urethoimine, an isocyanurate, an oxadiazinetrione, a polymethylene polyphenyl polyisocyanate (crude MDI, polymeric MDI), and a crude TDI, of the polyisocyanate compound.

The polyisocyanate compounds and the derivatives thereof may be used alone or in combination of two or more thereof.

As the polyisocyanate compound (C), it is preferable to use at least one selected from an aliphatic polyisocyanate compound, an alicyclic polyisocyanate compound, and a derivative thereof from a viewpoint of weather resistance of the coating film to be formed and the like, and it is more preferable to use an aliphatic polyisocyanate compound and/or a derivative thereof from viewpoints of an increase in a solid content of a coating composition to be obtained, the finished appearance and the scratch resistance of the coating film to be formed, and the like.

As the aliphatic polyisocyanate compound and/or the derivative thereof, among these, it is preferable to use an aliphatic diisocyanate compound and/or an isocyanurate thereof, and it is more preferable to use a hexamethylene diisocyanate and/or an isocyanurate thereof, from the viewpoints of the increase in the solid content of the coating composition to be obtained, the finished appearance of the coating film to be formed, and the like.

In the polyisocyanate compound (C), the isocyanate group of the polyisocyanate compound (C) may be blocked with a blocking agent.

Examples of the blocking agent include phenolic-based compounds such as phenol, cresol, xylenol, nitrophenol, ethylphenol, hydroxydiphenyl, butylphenol, isopropyl phenol, nonylphenol, octylphenol, and methyl hydroxymoate; lactam-based compounds such as ε-caprolactam, δ-valerolactam, γ-butyrolactam, and β-propiactam; aliphatic alcohol-based compounds such as methanol, ethanol, propyl alcohol, butyl alcohol, amyl alcohol, and lauryl alcohol; ether-based compounds such as ethylene glycol monomethyl ether, ethylene glycol monoethyl ether, ethylene glycol monobutyl ether, diethylene glycol monomethyl ether, diethylene glycol monoethyl ether, propylene glycol monomethyl ether, and methoxymethanol; alcohol-based compounds such as benzyl alcohol, glycolic acid, methyl glycolate, ethyl glycolate, butyl glycolate, lactic acid, methyl lactate, ethyl lactate, butyl lactate, methylol urea, methylol melamine, diacetone alcohol, 2-hydroxyethyl acrylate, and 2-hydroxyethyl methacrylate; oxime-based compounds such as formamide oxime, acetoamide oxime, acetooxime, methyl ethyl ketoxime, diacetyl monooxime, benzophenone oxime, and cyclohexane oxime; active methylene-based compounds such as dimethyl malonate, diethyl malonate, ethyl acetoacetate, methyl acetoacetate, and acetyl acetone; mercaptan-based compounds such as butyl mercaptan, t-butyl mercaptan, hexyl mercaptan, t-dodecyl mercaptan, 2-mercaptobenzothiazole, thiophenol, methyl thiophenol, and ethyl thiophenol; acid amide-based compounds such as acetoanilide, acetanisidide, acetotoluide, acrylamide, methacrylamide, acetic acid amide, stearic acid amide, and benzamide; imide-based compounds such as succinimide, phthalimide, and maleimide; amine-based compounds such as diphenylamine, phenylnaphthylamine, xylidine, N-phenylxylidine, carbazole, aniline, naphthylamine, butylamine, dibutylamine, and butylphenylamine; imidazole-based compounds such as imidazole and 2-ethylimidazole; urea-based compounds such as urea, thiourea, ethylene urea, ethylene thiourea, and diphenyl urea; carbamate-based compounds such as phenyl N-phenyl carbamate; imine-based compounds such as ethyleneimine and propyleneimine; sulfite-based compounds such as sodium bisulfite and potassium bisulfite; and azole-based compounds. Examples of the azole-based compound include pyrazole or pyrazole derivatives such as pyrazole, 3,5-dimethylpyrazole, 3-methylpyrazole, 4-benzyl-3,5-dimethylpyrazole, 4-nitro-3,5-dimethylpyrazole, 4-bromo-3,5-dimethylpyrazole, and 3-methyl-5-phenylpyrazole; imidazole or imidazole derivatives such as imidazole, benzimidazole, 2-methylimidazole, 2-ethylimidazole, and 2-phenylimidazole; and imidazoline derivatives such as 2-methylimidazoline and 2-phenylimidazoline.

A content of the polyisocyanate compound (C) in the high-solid-content coating composition according to the present invention is preferably in a range of 5 parts by mass to 60 parts by mass, more preferably 15 parts by mass to 50 parts by mass, and still more preferably 25 parts by mass to 45 parts by mass, based on 100 parts by mass of the resin solid content of the high-solid-content coating composition, from the viewpoints of the hardness, the scratch resistance, the water resistance, and the finished appearance of the coating film to be formed.

<High-Solid-Content Coating Composition>

The high-solid-content coating composition according to the present invention is the high-solid-content coating composition, containing: (A) the hydroxy group-containing acrylic resin having the glass transition temperature (Tg) in the range of 20°C to 70°C and the weight average molecular weight in the range of 3,000 to 10,000; (B) the hydroxy group-containing polyester resin which is the reaction product of the polyfunctional compound (b-1) having the carboxy group and the hydroxy group in total of three or more in one molecule, the monoepoxide compound (b-2) having the hydrocarbon group having 4 or more carbon atoms, and the caprolactone compound (b-3); and (C) the polyisocyanate compound, in which the solid content at the time of coating is 50% or more.

In the high-solid-content coating composition according to the present invention, when the solid content at the time of coating is 50 mass% or more, VOCs are satisfactorily reduced. Among these, the solid content at the time of coating is preferably 53 mass% or more, and more preferably 55 mass% or more from a viewpoint of reducing VOCs.

In the present description, the term "solid content" means a non-volatile component such as a resin, a curing agent, or a pigment that is contained in the coating composition and that remains after the coating composition is dried at 110°C for 1 hour. Therefore, for example, a total solid content of the coating composition can be calculated by weighing the coating composition in a heat-resistant container such as an aluminum foil cup, spreading the coating composition on a bottom surface of the container, drying the coating composition at 110°C for 1 hour, weighing a mass of components in the coating composition remaining after the drying, and determining a ratio of the mass of the components remaining after the drying to a total mass of the coating composition before the drying.

The reason for capability of forming the coating film excellent in hardness, scratch resistance, water resistance, and finished appearance by using the high-solid-content coating composition according to the present invention is not clear, but since the glass transition temperature (Tg) of the hydroxy group-containing acrylic resin (A) is as high as in the range of 20°C to 70°C, the hardness and the scratch resistance are good, and since the weight average molecular weight is in the range of 3,000 to 10,000, a viscosity of the coating is decreased, and a coating film excellent in finished appearance can be formed regardless of having a high solid content. With regard to the reaction components of the hydroxy group-containing polyester resin (B), the polyfunctional compound (b-1) having a carboxy group and a hydroxy group in total of three or more in one molecule is contained, and thus a degree of entanglement of a molecular chain is reduced, and therefore, the viscosity of the coating is decreased, and a coating film excellent in finished appearance can be formed regardless of having a high solid content. The monoepoxide compound (b-2) having a hydrocarbon group having 4 or more carbon atoms is contained, and thus hydrophobicity is increased, and a coating film excellent in water resistance can be formed. Further, the caprolactone compound (b-3) is contained, and thus flexibility of a coating film is improved, and a coating film excellent in scratch resistance can be formed, and since a low-molecular-weight component in the hydroxy group-containing polyester resin (B) is reduced, a coating film excellent in water resistance can be formed. Since both the hydroxy group-containing acrylic resin (A) and the hydroxy group-containing polyester resin (B) have a hydroxy group, it is presumed that a reaction with the polyisocyanate compound satisfactorily proceeds, and a coating film excellent in hardness, water resistance, and scratch resistance can be formed.

<Other Components>

The high-solid-content coating composition according to the present invention may further contain, if necessary, a resin other than those described above, a crosslinking agent other than the polyisocyanate compound (C), a pigment, an organic solvent, a curing catalyst, a dispersant, an anti-settling agent, an antifoaming agent, a thickener, an ultraviolet absorber, a light stabilizer, a surface conditioner, a scratch resistance improver, and the like.

Examples of the resin other than those described above include an acrylic resin which may contain a hydroxy group other than the hydroxy group-containing acrylic resin (A), a polyester resin which may contain a hydroxy group other than the hydroxy group-containing polyester resin (B), a polyurethane resin which may contain a hydroxy group, a polyether resin which may contain a hydroxy group, a polycarbonate resin which may contain a hydroxy group, and an epoxy resin which may contain a hydroxy group. Among these, it is preferable to contain an acrylic resin which may contain a hydroxy group other than the hydroxy group-containing acrylic resin (A), and it is preferable to contain a hydroxy group-containing acrylic resin (D) other than the hydroxy group-containing acrylic resin (A).

The hydroxy group-containing acrylic resin (D) can be produced, for example, by a method described in a description column of the hydroxy group-containing acrylic resin (A).

With regard to the hydroxy group-containing acrylic resin (D), from a viewpoint of an anti-after-tack property of the coating film to be formed, it is preferable to use a hydroxy group-containing acrylic resin (D1) having an acid value in a range of 60 mgKOH/g to 120 mgKOH/g.

When the high-solid-content coating composition according to the present invention contains the hydroxy group-containing acrylic resin (D), a content thereof is preferably in a range of 1 part by mass to 30 parts by mass, more preferably 2 parts by mass to 25 parts by mass, and still more preferably 3 parts by mass to 20 parts by mass, based on 100 parts by mass of the resin solid content of the high-solid-content coating composition, from the viewpoint of the anti-after-tack property of the coating film to be formed and the like.

Examples of the crosslinking agent other than the polyisocyanate compound (C) include a melamine resin.

As the melamine resin, a partially methylolated melamine resin or a completely methylolated melamine resin obtained by a reaction between a melamine component and an aldehyde component may be used. Examples of the aldehyde component include formaldehyde, paraformaldehyde, acetaldehyde, and benzaldehyde.

It is also possible to use a melamine resin obtained by partially or completely etherifying a methylol group of the methylolated melamine resin with an appropriate alcohol. Examples of the alcohol used for the etherification include methyl alcohol, ethyl alcohol, n-propyl alcohol, i-propyl alcohol, n-butyl alcohol, i-butyl alcohol, 2-ethyl-1-butanol, and 2-ethyl-1-hexanol.

The melamine resin is preferably a methyl etherified melamine resin obtained by partially or completely etherifying, with methyl alcohol, a methylol group of a partially or completely methylolated melamine resin, a butyl etherified melamine resin obtained by partially or completely etherifying, with butyl alcohol, a methylol group of a partially or completely methylolated melamine resin, or a methyl butyl mixed etherified melamine resin obtained by partially or completely etherifying, with methyl alcohol and butyl alcohol, a methylol group of a partially or completely methylolated melamine resin.

The melamine resin preferably has a weight average molecular weight in a range of 400 to 6,000, more preferably in a range of 500 to 5,000, and still more preferably in a range of 800 to 4,000.

As the melamine resin, a commercially available product may be used. Examples of a trade name of the commercially available product include "CYMEL 202", "CYMEL 203", "CYMEL 238", "CYMEL 251", "CYMEL 303", "CYMEL 323", "CYMEL 324", "CYMEL 325", "CYMEL 327", "CYMEL 350", "CYMEL 385", "CYMEL 1156", "CYMEL 1158", "CYMEL 1116", and "CYMEL 1130" (all manufactured by Allnex Japan Inc.); and "U-VAN 120", "U-VAN 20HS", "U-VAN 20SE60", "U-VAN 2021", "U-VAN 2028", and "U-VAN 28-60" (all manufactured by Mitsui Chemicals, Inc.).

The melamine resins may be used alone or in combination of two or more thereof.

When the high-solid-content coating composition according to the present invention contains the melamine resin, a content thereof is preferably in a range of 1 part by mass to 30 parts by mass, more preferably 2 parts by mass to 25 parts by mass, and still more preferably 3 parts by mass to 20 parts by mass, based on 100 parts by mass of the resin solid content of the high-solid-content coating composition, from the viewpoints of the hardness and the scratch resistance of the coating film to be formed and the like.

Examples of the pigment include a coloring pigment, a brilliant pigment, and an extender pigment. These pigments may be used alone or in combination of two or more thereof.

Examples of the coloring pigment include titanium oxide, zinc white, carbon black, cadmium red, molybdenum red, chrome yellow, chromium oxide, prussian blue, cobalt blue, azo pigments, phthalocyanine pigments, quinacridone pigments, isoindoline pigments, threne-based pigments, and perylene pigments.

Examples of the brilliant pigment include aluminum powder, mica powder, and mica powder coated with titanium oxide.

Examples of the extender pigment include talc, clay, kaolin, baryta, barium sulfate, barium carbonate, calcium carbonate, and alumina white.

These pigments may be used alone or in combination of two or more thereof.

In a case where the high-solid-content coating composition according to the present invention is used as a clear coating and contains a pigment, a blending amount of the pigment is preferably such an amount that does not impair transparency of an obtained coating film, and for example, is preferably in a range of usually 0.1 mass% to 20 mass%, particularly 0.3 mass% to 10 mass%, and more particularly 0.5 mass% to 5 mass% with respect to a total solid content in the high-solid-content coating composition.

In a case where the high-solid-content coating composition according to the present invention is used as a coloring coating and contains a pigment, a blending amount of the pigment is preferably in a range of usually 1 mass% to 200 mass%, particularly 2 mass% to 100 mass%, and more particularly 5 mass% to 50 mass% with respect to the total solid content in the high-solid-content coating composition.

Examples of the organic solvent include aromatic-based solvents such as toluene, xylene, and "Swasol 1000" (manufactured by Cosmo Oil Co., Ltd, trade name, high boiling point petroleum-based solvent); ester-based solvents such as ethyl acetate, butyl acetate, propyl propionate, butyl propionate, 1-methoxy-2-propyl acetate, 2-ethoxyethyl propionate, ethyl-3-ethoxypropionate, 3-methoxybutyl acetate, ethylene glycol monoethyl ether acetate, diethylene glycol monoethyl ether acetate, and propylene glycol monomethyl ether acetate; ketone-based solvents such as methyl ethyl ketone, methyl isobutyl ketone, and methyl amyl ketone; and alcohol-based solvents such as isopropanol, n-butanol, isobutanol, and 2-ethylhexanol. These solvents may be used alone or in combination of two or more thereof.

Examples of the curing catalyst include: organometallic compounds such as tin octylate, dibutyltin diacetate, dibutyltin di(2-ethylhexanoate), dibutyltin dilaurate, dioctyltin diacetate, dioctyltin di(2-ethylhexanoate), dibutyltin oxide, dibutyltin sulfide, dioctyltin oxide, dibutyltin fatty acid salt, lead 2-ethylhexanoate, zinc octylate, zinc naphthenate, zinc fatty acids, bismuth octanate, bismuth 2-ethylhexanoate, bismuth oleate, bismuth neodecanoate, bismuth versate, bismuth naphthenate, cobalt naphthenate, calcium octylate, copper naphthenate, and tetra(2-ethylhexyl)titanate; sulfonic acids such as paratoluenesulfonic acid, dodecylbenzenesulfonic acid, and dinonylnaphthalenesulfonic acid; alkylphosphate esters such as monobutyl phosphate, dibutyl phosphate, mono(2-ethylhexyl)phosphate, and di(2-ethylhexyl)phosphate; and salts of these acids and amine compounds. These catalysts may be used alone or in combination of two or more thereof.

When the high-solid-content coating composition according to the present invention contains the curing catalyst, a content of the curing catalyst is preferably in a range of 0.005 mass% to 2 mass%, and particularly 0.01 mass% to 1 mass% with respect to the total solid content of the high-solid-content coating composition according to the present invention.

As the thickener, known thickeners of related art may be used, and examples thereof include clay minerals (for example, metal silicates and montmorillonite), acrylic (for example, those having a structure consisting of a polymer or an oligomer of an acrylic acid ester or a methacrylic acid ester in a molecule), polyolefins (for example, polyethylene and polypropylene), amides (higher fatty acid amides, polyamides, oligomers, and the like), polycarboxylic acids (including a derivative having at least two or more carboxy groups in a molecule), cellulose (including various derivatives such as nitrocellulose, acetyl cellulose, and cellulose ether), urethane (a polymer, an oligomer, or the like having a urethane structure in a molecule), urea (a polymer, an oligomer, or the like having a urea structure in a molecule), and urethane urea (a polymer, an oligomer, or the like having a urethane structure and a urea structure in a molecule).

As the ultraviolet absorber, known ultraviolet absorbers of related art may be used, and examples thereof include a benzotriazole-based absorber, a triazine-based absorber, a salicylic acid derivative-based absorber, and a benzophenone-based absorber. These absorbers may be used alone or in combination of two or more thereof.

In a case where the high-solid-content coating composition according to the present invention contains the ultraviolet absorber, a blending amount of the ultraviolet absorber is preferably in a range of usually 0.1 mass% to 10 mass%, particularly 0.2 mass% to 5 mass%, and more particularly 0.3 mass% to 2 mass% with respect to the total solid content in the high-solid-content coating composition.

As the light stabilizer, known light stabilizers of related art may be used, and examples thereof include a hindered amine-based light stabilizer.

As the hindered amine-based light stabilizer, a hindered amine-based light stabilizer having low basicity may be suitably used from the viewpoint of the pot life. Examples of such a hindered amine-based light stabilizer include acylated hindered amines and amino ether-based hindered amines, and specific examples thereof include "HOSTAVIN 3058" (trade name, manufactured by Clariant) and "TINUVIN 123" (trade name, manufactured by BASF).

A coating method of the high-solid-content coating composition according to the present invention is not particularly limited, and examples thereof include coating methods such as an air spray coating, an airless spray coating, a rotary atomization coating, and a curtain coating, and a wet coating film can be formed by these methods. In these coating methods, static electricity may be applied as necessary. Among these, the air spray coating or the rotary atomization coating is particularly preferred. It is preferable that a coating amount of the present coating be an amount such that a cured film thickness is usually 10 $\mu$m to 60 $\mu$m, and particularly 25 $\mu$m to 50 $\mu$m.

When the air spray coating, the airless spray coating, and the rotary atomization coating are performed, it is preferable that a viscosity of the present coating be appropriately adjusted using a thickener and a solvent such as an organic solvent so as to be in a viscosity range suitable for the coating, usually in a viscosity range of 15 seconds to 60 seconds, and particularly 20 seconds to 40 seconds at 20°C in a viscometer of a Ford cup No. 4.

The wet coating film obtained by coating the object to be coated with the present coating may be cured by heating, and the heating may be performed by a known heating means, and for example, a drying furnace such as a hot air furnace, an electric furnace, or an infrared induction heating furnace may be used. A heating temperature is not particularly limited, and is, for example, suitably in a range of 60°C to 160°C, and preferably 80°C to 140°C. A heating time is not particularly limited, and is, for example, suitably in a range of 10 minutes to 60 minutes, and preferably 15 minutes to 30 minutes.

The high-solid-content coating composition according to the present invention can form the coating film excellent in hardness, scratch resistance, water resistance, and finished appearance, and thus may be suitably used as an overcoat top clear coating. The present coating may be particularly suitably used as an automotive coating.

<Method for Forming Multilayer Coating Film>

As a method for forming a multilayer coating film in which coating is performed with the present coating as an overcoat top clear coating, for example, the following method may be suitably used.

The method for forming a multilayer coating film includes:

a step (1): coating an object to be coated with an intermediate coating composition to form an intermediate coating film;
a step (2): coating the intermediate coating film formed in the step (1) with a basecoat coating composition to form a basecoat coating film;
a step (3): coating the basecoat coating film formed in the step (2) with the high-solid-content coating composition according to the present invention to form a clearcoat coating film; and
a step (4): heating and curing the intermediate coating film, the basecoat coating film, and the clearcoat coating film formed in the steps (1) to (3) at once.

The object to be coated is not particularly limited, and examples thereof include an outer plate portion of an automobile body of a passenger car, a truck, a motorcycle, a bus, or the like; an automotive part; and an outer plate portion of a household electric product such as a mobile phone or an audio device. Among these, the outer plate portion of the automobile body and the automotive part are preferred.

Materials of these objects to be coated are not particularly limited. Examples thereof include metal materials such as iron, aluminum, brass, copper, tinplate, stainless steel, galvanized steel, and zinc alloy (Zn-Al, Zn-Ni, Zn-Fe, or the like) plated steel; resins such as a polyethylene resin, a polypropylene resin, an acrylonitrile-butadiene-styrene (ABS) resin, a polyamide resin, an acrylic resin, a vinylidene chloride resin, a polycarbonate resin, a polyurethane resin, and an epoxy resin; plastic materials such as various FRP; inorganic materials such as glass, cement, and concrete; wood; and fiber materials such as paper and cloth. Among these, the metal materials and the plastic materials are preferred.

A surface of the object to be coated to which the multilayer coating film is applied may be a metal surface of an outer plate portion of an automobile body, an automotive part, a household electric product, a metal substrate such as a steel sheet constituting these products, or the like, which is subjected to a surface treatment such as a phosphate treatment, a chromate treatment, or a composite oxide treatment.

The coating film may be further formed on an object which may or may not be subjected to the surface treatment. For example, an object to be coated which is a substrate may be subjected to the surface treatment as necessary, and an undercoat coating film may be formed thereon. When the object to be coated is, for example, an automobile body, the undercoat coating film may be formed by using an undercoat coating composition known per se which is usually used in coating of the automobile body.

The undercoat coating composition is usually used for coating for a purpose of imparting an anticorrosion property to an object to be coated.

As the undercoat coating composition for forming the undercoat coating film, for example, an electrodeposition coating, preferably a cationic electrodeposition coating may be used.

The undercoat coating film is preferably a cured coating film from a viewpoint of a finished appearance of a multilayer coating film to be formed.

As the intermediate coating composition, a known thermosetting intermediate coating composition for coating an automobile body or the like may be used. As the intermediate coating composition, for example, a thermosetting coating containing a base resin having a crosslinkable functional group, a crosslinking agent, a coloring pigment, and an extender pigment may be suitably used.

The intermediate coating composition is usually used for coating for a purpose of imparting smoothness, chipping resistance, and adhesion between coating films to an object to be coated.

Examples of the crosslinkable functional group of the base resin include a carboxy group, a hydroxy group, and an epoxy group.

Examples of the base resin include an acrylic resin, a polyester resin, an alkyd resin, and a urethane resin.

Examples of the crosslinking agent include a melamine resin, a polyisocyanate compound, and a blocked polyisocyanate compound.

As the intermediate coating composition, either an aqueous coating composition or an organic solvent coating composition may be used, but the aqueous coating composition is preferred from a viewpoint of reducing an environmental load and the like.

A coating amount of the intermediate coating composition is preferably an amount such that a cured film thickness is 10 $\mu$m to 60 $\mu$m, more preferably an amount such that a cured film thickness is 15 $\mu$m to 50 $\mu$m, and still more preferably an amount such that a cured film thickness is 20 $\mu$m to 40 $\mu$m.

As the basecoat coating composition, a known thermosetting basecoat coating composition for coating an automobile body or the like may be used. As the basecoat coating composition, for example, a thermosetting coating composition containing a base resin having a crosslinkable functional group, a crosslinking agent, a coloring pigment, a brilliant pigment, and an extender pigment may be suitably used.

The basecoat coating composition is usually used for coating for a purpose of imparting excellent designability (for example, color, metallic feeling, and gloss) to an object to be coated.

Examples of the crosslinkable functional group of the base resin include a carboxy group, a hydroxy group, and an epoxy group.

Examples of the base resin include an acrylic resin, a polyester resin, an alkyd resin, and a urethane resin.

Examples of the crosslinking agent include a melamine resin, a polyisocyanate compound, and a blocked polyisocyanate compound.

As the basecoat coating composition, either an aqueous coating composition or an organic solvent coating composition may be used, but the aqueous coating composition is preferred from a viewpoint of reducing an environmental load and the like.

A coating amount of the basecoat coating composition is preferably an amount such that a cured film thickness is 5 $\mu$m to 40 $\mu$m, more preferably an amount such that a cured film thickness is 6 $\mu$m to 35 $\mu$m, and still more preferably an amount such that a cured film thickness is 7 $\mu$m to 30 $\mu$m.

The heating may be performed by a known means, and for example, a drying furnace such as a hot air furnace, an electric furnace, or an infrared induction heating furnace may be used. A heating temperature is preferably 60°C to 180°C, more preferably 70°C to 170°C, and still more preferably 80°C to 160°C. A heating time is not particularly limited, but is preferably in a range of 10 minutes to 40 minutes, and more preferably in a range of 20 minutes to 40 minutes.

EXAMPLES

Hereinafter, the present invention will be described more specifically with reference to Production Examples, Examples, and Comparative Examples. However, the present invention is not limited thereto. In each example, "parts" and "%" are based on mass unless otherwise specified. A film thickness of a coating film is based on a cured coating film.

[1] Preparation of Object to be Coated

A degreased and zinc phosphate-treated steel sheet (JISG3141, size: 400 mm × 300 mm × 0.8 mm) was electrodeposition coated with a cationic electrodeposition coating "ELECRON GT-10" (trade name, manufactured by Kansai Paint Co., Ltd., a material in which a blocked polyisocyanate compound was used as a curing agent for an epoxy resin polyamine-based cationic resin) so as to have a film thickness of 20 $\mu$m based on a cured coating film, and was heated at 170°C for 20 minutes for crosslinking and curing, so as to form an electrodeposition coating film thereby obtaining an object to be coated.

[2] Preparation of Coating

<Production of Hydroxy Group-Containing Acrylic Resin (A)>

Production Example 1

A reaction vessel including a thermometer, a thermostat, a stirrer, a reflux condenser, a nitrogen inlet tube, and a dropping device was charged with 27 parts of "Swasol 1000" (trade name, manufactured by Cosmo Oil Co., Ltd, aromatic-based organic solvent) and 5 parts of propylene glycol monomethyl ether acetate. The charged solution was stirred at 150°C while nitrogen gas was blown into the reaction vessel, and a monomer mixture containing 20 parts of styrene, 32.5 parts of 2-hydroxypropyl acrylate, 46.2 parts of isobutyl methacrylate, 1.3 parts of acrylic acid, and 3.2 parts of di-tertiary amyl peroxide (polymerization initiator) was added dropwise thereto at a uniform rate over 4 hours. Thereafter, the mixture was aged at 150°C for 1 hour, cooled, and further diluted by adding 21 parts of isobutyl acetate to obtain a solution of a hydroxy group-containing acrylic resin (A-1) having a solid content concentration of 65%. The obtained hydroxy group-containing acrylic resin (A-1) had an acid value of 10.1 mgKOH/g, a hydroxy value of 140 mgKOH/g, a weight average molecular weight of 8,000, and a glass transition temperature of 39°C.

Production Examples 2 to 4

In Production Example 1, solutions of hydroxy group-containing acrylic resins (A-2) to (A-4) having a solid content concentration of 65% were obtained in the same manner as in Production Example 1, except that blending compositions were as shown in Table 1. Table 1 also shows an acid value, a hydroxy value, a weight average molecular weight, and a glass transition temperature of each hydroxy group-containing acrylic resin.

Table 1

| Production Example | | | 1 | 2 | 3 | 4 |
|---|---|---|---|---|---|---|
| Name of hydroxy group-containing acrylic resin (A) | | | A-1 | A-2 | A-3 | A-4 |
| Monomer mixture | Acid group-containing polymerizable unsaturated monomer | Acrylic acid | 1.3 | 1.3 | 1.3 | 1.3 |
| | Hydroxy group-containing polymerizable unsaturated monomer | 2-hydroxypropyl acrylate | 32.5 | 32.5 | 32.5 | 32.5 |
| | Other polymerizable unsaturated monomers | Styrene | 20 | 20 | 20 | 30 |
| | | Isobutyl methacrylate | 46.2 | 46.2 | 34.2 | |
| | | N-butyl acrylate | | | 12 | |
| | | Methyl methacrylate | | | | 36.2 |
| Polymerization initiator | | Di-tertiary amyl peroxide | 3.2 | 5.5 | 3.2 | 3.2 |
| Acid value (mgKOH/g) | | | 10.1 | 10.1 | 10.1 | 10.1 |
| Hydroxy value (mgKOH/g) | | | 140 | 140 | 140 | 140 |
| Weight average molecular weight | | | 8,000 | 4,500 | 8,000 | 8,000 |
| Glass transition temperature (°C) | | | 39 | 39 | 22 | 58 |

<Production of Hydroxy Group-Containing Acrylic Resin (A') Having Alkoxysilyl Group> Production Example 5

A reaction vessel including a thermometer, a thermostat, a stirrer, a reflux condenser, a nitrogen inlet tube, and a dropping device was charged with 30 parts of "Swasol 1000" (trade name, manufactured by Cosmo Oil Co., Ltd, aromatic-based organic solvent) and 10 parts of n-butanol. The charged solution was stirred at 125°C while nitrogen gas was blown into the reaction vessel, and a monomer mixture containing 15 parts of γ-methacryloxypropyltrimethoxysilane, 32.5 parts of 2-hydroxyethyl methacrylate, 10 parts of styrene, 10 parts of 2-ethylhexyl acrylate, 32.5 parts of isobutyl methacrylate, and 7.0 parts of 2,2'-azo bis(2-methylbutylonitrile) (polymerization initiator) was added dropwise thereto at a uniform rate over 4 hours. Thereafter, the mixture was aged at 125°C for 30 minutes, and then a solution containing 0.5 parts of 2,2'-azo bis(2-methylbutylonitrile) and 5.0 parts of "Swasol 1000" was added dropwise at a uniform rate over 1 hour. Thereafter, the mixture was aged at 125°C for 1 hour, cooled, and further diluted by adding 6 parts of isobutyl acetate to obtain a solution of a hydroxy group-containing acrylic resin (A'-1) containing an alkoxysilyl group and having a solid content concentration of 65%. The obtained hydroxy group-containing acrylic resin (A'-1) containing an alkoxysilyl group had an alkoxysilyl group content of 60 mmol/g, a hydroxy value of 140 mgKOH/g, a weight average molecular weight of 7,000, and a glass transition temperature of 32°C.

<Production of Hydroxy Group-Containing Acrylic Resin (D)>

Production Example 6

A reaction vessel including a thermometer, a thermostat, a stirrer, a reflux condenser, a nitrogen inlet tube, and a dropping device was charged with 27 parts of "Swasol 1000" (trade name, manufactured by Cosmo Oil Co., Ltd, aromatic-based organic solvent) and 5 parts of propylene glycol monomethyl ether acetate. The charged solution was stirred at 150°C while nitrogen gas was blown into the reaction vessel, and a monomer mixture containing 20 parts of styrene, 32.5 parts of 2-hydroxypropyl acrylate, 46.2 parts of isobutyl methacrylate, 1.3 parts of acrylic acid, and 2.0 parts of di-tertiary amyl peroxide (polymerization initiator) was added dropwise thereto at a uniform rate over 4 hours. Thereafter, the mixture was aged at 150°C for 1 hour, cooled, and further diluted by adding 21 parts of isobutyl acetate to obtain a solution of a hydroxy group-containing acrylic resin (D-1) having a solid content concentration of 65%. The obtained hydroxy group-containing acrylic resin (D-1) had an acid value of 10.1 mgKOH/g, a hydroxy value of 140 mgKOH/g, a weight average molecular weight of 11,000, and a glass transition temperature of 39°C.

Production Examples 7 to 9

In Production Example 6, solutions of hydroxy group-containing acrylic resins (D-2) to (D-4) having a solid content concentration of 65% were obtained in the same manner as in Production Example 6, except that blending compositions were as shown in Table 2. Table 2 also shows an acid value, a hydroxy value, a weight average molecular weight, and a glass transition temperature of each hydroxy group-containing acrylic resin.

Table 2

| Production Example | | | 6 | 7 | 8 | 9 |
|---|---|---|---|---|---|---|
| Name of hydroxy group-containing acrylic resin (D) | | | D-1 | D-2 | D-3 | D-4 |
| Monomer mixture | Acid group-containing polymerizable unsaturated monomer | Acrylic acid | 1.3 | 1.3 | 1.3 | 1.3 |
| | Hydroxy group-containing polymerizable unsaturated monomer | 2-hydroxypropyl acrylate | 32.5 | 32.5 | 32.5 | 12.5 |
| | | 2-hydroxyethyl methacrylate | | | | 20 |
| | Other polymerizable unsaturated monomers | Styrene | 20 | 20 | 20 | 30 |
| | | Isobutyl methacrylate | 462 | 46.2 | 30 | |
| | | N-butyl acrylate | | | 16.2 | |
| | | Methyl methacrylate | | | | 36.2 |
| Polymerization initiator | | Di-tertiary amyl peroxide | 2 | 8 | 3.2 | 3.2 |
| Acid value (mgKOH/g) | | | 10.1 | 10.1 | 10.1 | 10.1 |
| Hydroxy value (mgKOH/g) | | | 140 | 140 | 140 | 140 |
| Weight average molecular weight | | | 11,000 | 2,500 | 8,000 | 8,000 |
| Glass transition temperature (°C) | | | 39 | 39 | 17 | 75 |

Production Example 10

A reaction vessel including a thermometer, a thermostat, a stirrer, a reflux condenser, a nitrogen inlet tube, and a dropping device was charged with 27 parts of "Swasol 1000" (trade name, manufactured by Cosmo Oil Co., Ltd, aromatic-based organic solvent) and 5 parts of propylene glycol monomethyl ether acetate. The charged solution was stirred at 150°C while nitrogen gas was blown into the reaction vessel, and a monomer mixture containing 11.5 parts of 2-ethylhexyl methacrylate, 40 parts of 2-hydroxyethyl methacrylate, 38 parts of isobutyl acrylate, 10.5 parts of acrylic acid, and 6.5 parts of di-tertiary amyl peroxide (polymerization initiator) was added dropwise thereto at a uniform rate over 4 hours. Thereafter, the mixture was aged at 150°C for 1 hour, cooled, and further diluted by adding 21 parts of isobutyl acetate to obtain a solution of a hydroxy group-containing acrylic resin (D1-1) having a solid content concentration of 65%. The obtained hydroxy group-containing acrylic resin (D1-1) had an acid value of 81.8 mgKOH/g, a hydroxy value of 173 mgKOH/g, a weight average molecular weight of 3,500, and a glass transition temperature of 17°C.

<Production of Hydroxy Group-Containing Polyester Resin (B)>

Production Example 11

A reaction vessel including a stirrer, a reflux condenser, and a thermometer was charged with 148 parts of dimethylol butanoic acid, 735 parts of "Cardura E10P" (trade name, manufactured by Momentive Specialty Chemicals Inc., neodecanoic acid monoglycidyl ester), and 308 parts of hexahydrophthalic anhydride, and the mixture was reacted at 190°C for 3 hours. Thereafter, 342 parts of ε-caprolactone were added thereto, and the mixture was reacted at 190°C for 3 hours, and then diluted with butyl acetate to obtain a solution of a hydroxy group-containing polyester resin (B-1) having a solid content concentration of 80%. The obtained hydroxy group-containing polyester resin (B-1) had an acid value of 4 mgKOH/g, a hydroxy value of 120 mgKOH/g, and a number average molecular weight of 2,100.

Production 12 to 17

In Production Example 11, solutions of hydroxy group-containing polyester resins (B-2) to (B-7) having a solid content concentration of 80% were obtained in the same manner as in Production Example 11, except that blending compositions were as shown in Table 3. Table 3 also shows an acid value, a hydroxy value, and a number average molecular weight of each hydroxy group-containing polyester resin.

Table 3

| Production Example | | 11 | 12 | 13 | 14 | 15 | 16 | 17 |
|---|---|---|---|---|---|---|---|---|
| Name of hydroxy group-containing polyester resin (B) | | B-1 | B-2 | B-3 | B-4 | B-5 | B-6 | B-7 |
| Polyfunctional compound (b-1) having carboxy group and hydroxy group in total of three or more in one molecule | Dimethylolbutanoic acid | 148 | 134 | 134 | 148 | | | |
| | Malic acid | | | | | 134 | | |
| | Citric acid | | | | | | 192 | |
| | Tartaric acid | | | | | | | 150 |
| Monoepoxide compound (b-2) having hydrocarbon group having 4 or more carbon atoms | "Cardura E10P" | 735 | 735 | 613 | 245 | 735 | 980 | 980 |
| Polybasic acid compound (b-4) | Hexahydrophthalic anhydride | 308 | 308 | 308 | | 154 | 154 | 308 |
| Caprolactone compound (b-3) | $\varepsilon$-caprolactone | 342 | 456 | 262 | 342 | 342 | 456 | 456 |
| Acid value (mgKOH/g) | | 4 | 12 | 21 | 2 | 4 | 3 | 4 |
| Hydroxy value (mgKOH/g) | | 120 | 120 | 111 | 232 | 128 | 98 | 93 |
| Number average molecular weight | | 1,529 | 1,633 | 1,317 | 733 | 1,361 | 1,779 | 1,890 |

<Production of Hydroxy Group-Containing Polyester Resin (E) Other Than Hydroxy Group-Containing Polyester Resin (B)>

Production Example 18

A reaction vessel including a stirrer, a reflux condenser, and a thermometer was charged with 90 parts of lactic acid, 490 parts of "Cardura E10P" (trade name, manufactured by Momentive Specialty Chemicals Inc., neodecanoic acid monoglycidyl ester), and 154 parts of hexahydrophthalic anhydride, and the mixture was reacted at 190°C for 3 hours. Thereafter, 228 parts of $\varepsilon$-caprolactone were added thereto, and the mixture was reacted at 190°C for 3 hours, and then diluted with butyl acetate to obtain a solution of a hydroxy group-containing polyester resin (E-1) having a solid content concentration of 80%. The obtained hydroxy group-containing polyester resin (E-1) had an acid value of 1 mgKOH/g, a hydroxy value of 176 mgKOH/g, and a number average molecular weight of 961.

Production Example 19

A reaction vessel including a stirrer, a reflux condenser, and a thermometer was charged with 148 parts of dimethylol butanoic acid, 735 parts of "Cardura E10P" (trade name, manufactured by Momentive Specialty Chemicals Inc., neodecanoic acid monoglycidyl ester), and 308 parts of hexahydrophthalic anhydride, and the mixture was reacted at 190°C for 6 hours, and then diluted with butyl acetate to obtain a solution of a hydroxy group-containing polyester resin (E-2) having a solid content concentration of 80%. The obtained hydroxy group-containing polyester resin (E-2) had an acid value of 1 mgKOH/g, a hydroxy value of 142 mgKOH/g, and a number average molecular weight of 1,190.

Production Example 20

A reaction vessel including a stirrer, a reflux condenser, a water separator, and a thermometer was charged with 100.1 parts of hexahydrophthalic anhydride and 118 parts of 1,6-hexanediol, and the mixture was reacted at 230°C for 6 hours, and then diluted with butyl acetate to obtain a solution of a hydroxy group-containing polyester resin (E-3) having a solid content concentration of 80%. The obtained hydroxy group-containing polyester resin (E-3) had an acid value of 2 mgKOH/g, a hydroxy value of 192 mgKOH/g, and a number average molecular weight of 578.

<Production of High-Solid-Content Coating Composition>

Example 1

A main agent obtained by uniformly mixing 76.9 parts (solid content: 50 parts) of the solution of the hydroxy group-containing acrylic resin (A-1) obtained in Production Example 1, 10 parts (solid content: 8 parts) of the solution of the hydroxy group-containing polyester resin (B-1) obtained in Production Example 11, 0.5 parts (solid content: 0.3 parts) of "SETALUX 61767 VX-60" (trade name, manufactured by Allnex, viscosity modifier, solid content: 60%), and 0.4 parts (solid content: 0.2 parts) of "BYK-300" (trade name, manufactured by BYK-Chemie, surface conditioner, active component: 52%), and 42 parts of "Sumidur N3300" (trade name, manufactured by Sumika Covestro Urethane Co., Ltd., isocyanurate of hexamethylene diisocyanate, solid content: 100%) as a curing agent were uniformly mixed immediately before coating, and butyl acetate was added thereto to adjust a solid content at the time of coating to 58%, thereby obtaining a high-solid-content coating composition No. 1.

Examples 2 to 18 and Comparative Examples 1 to 9

High-solid-content coating compositions No. 2 to No. 27 were obtained in the same manner as the high-solid-content coating composition No. 1, except that blending compositions and solid contents at the time of coating were as shown in Tables 4 to 8 below. The blending compositions shown in Tables 4 to 8 are based on a solid content mass of each component.

Preparation of Test Plate>

The object to be coated prepared in the above [1] was electrostatically coated with "WP-523H" (trade name, manufactured by Kansai Paint Co., Ltd., acrylic/melamine resin-based aqueous intermediate coating composition) using a rotary atomization type electrostatic coating machine so as to have a cured film thickness of 20 $\mu$m, and was allowed to stand for 5 minutes to form an uncured intermediate coating film.
Next, the uncured intermediate coating film was electrostatically coated with "WBC-713T No. 1F7" (trade name, manufactured by Kansai Paint Co., Ltd., acrylic/melamine resin-based aqueous basecoat coating, silver coating color) using a rotary atomization type electrostatic coating machine so as to have a dry film thickness of 12 $\mu$m, was allowed to stand for 3 minutes, and then preheated at 80°C for 5 minutes to form an uncured basecoat coating film.
Next, the uncured basecoat coating film was electrostatically coated with the high-solid-content coating composition No. 1 using a rotary atomization type electrostatic coating machine so as to have a dry film thickness of 35 $\mu$m to form a clearcoat coating film, which was allowed to stand for 7 minutes. Next, by heating at 140°C for 30 minutes, the intermediate coating film, the basecoat coating film, and the clearcoat coating film were heated and cured to prepare a test plate of Example 1.
In the production of the test plate of the high-solid-content coating composition No. 1, test plates of Examples 2 to 18 and Comparative Examples 1 to 9 were produced in the same manner as in the production of the test plate of the high-solid-content coating composition No. 1, except that the high-solid-content coating composition No. 1 was changed to any one of the high-solid-content coating compositions No. 2 to No. 27.
Each of the test plates obtained above was evaluated by the following test method. Evaluation results are shown in Tables 4 to 8 together with the coating compositions.

(Test Method)

Tukon hardness: The test plate was allowed to stand in a thermostatic chamber at 20°C for 4 hours, and then a "Tukon hardness" was measured with TUKON (manufactured by American Chain&Cable Company, micro hardness tester). The Tukon hardness, which is a Knoop hardness test method, is a numerical value measured by a TUKON micro hardness tester manufactured by American Chain&Cable Company, and the Tukon hardness, also called Knoop hardness number (KHN), is a hardness of a coating film that is determined by pressing a square pyramidal diamond indenter into a test surface of a material with a constant test load and measuring a size of a resulting diamond-shaped indentation. The greater the value is, the greater the hardness is. A value of 10 or more is regarded as acceptable.

Scratch resistance: The test plate was fixed to a test stand of a car wash test machine (manufactured by Amtec, Carwash Lab Apparatus) under an atmosphere of 20°C, and a car wash brush was rotated at 127 rpm and the test stand was reciprocated 10 times while spraying a test solution obtained by mixing 1.5 g of "Sikron SH200" (trade name, silica fine particles having a particle size of 24 μm, manufactured by Quarzwerke) with 1 liter of water onto the test plate. Thereafter, water washing and drying were performed, and the 20° gloss before and after the test was measured using a gloss meter (manufactured by Byk-Gardner, device name: Micro Tri Gross), and a gloss retention rate was calculated according to the following equation. The higher the gloss retention rate is, the better the scratch resistance is. A and B are regarded as acceptable.

$$\text{Gloss retention rate (\%)} = (\text{gloss after test/gloss before test}) \times 100$$

A: Gloss retention rate of 85% or more
B: Gloss retention rate of 80% or more and less than 85%
C: Gloss retention rate of less than 80%

Water resistance: The test plate was immersed in warm water at 40°C for 240 hours, pulled out, and immediately after wiping off the water on a surface, 100 square grids with a size of 2 mm $\times$ 2 mm were formed on a coated surface according to JIS K 5600-5-6 (1990) on a coating film. An adhesive tape was attached to the surface, and was rapidly peeled off, and then the number of square grid coating films remained on the coated surface was evaluated. A is regarded as acceptable.

A: Remaining number/total number = 100/100, with no edge chipping
B: Remaining number/total number = 100/100, with edge chipping
C: Remaining number/total number = 99 or less

Finished appearance: A finished appearance was evaluated based on a long wave (LW) value and a short wave (SW) value measured by a Wave Scan (trade name, manufactured by BYK Gardner).
LW value: An index of smoothness, and the smaller the LW value is, the higher the smoothness of a coated surface is. A value of 6 or less is regarded as acceptable.
SW value: An index of image clarity, and the smaller the SW value is, the higher the image clarity of a coated surface is. A value of 17 or less is regarded as acceptable.
Anti-after-tack property: L values (brightness) at an acceptance angle of 15° and an acceptance angle of 110° were measured using a multiangle spectrophotometer "MA-68 II" (trade name, manufactured by X-Rite), and a flip-flop value was obtained according to the following equation and used as an index of an anti-after-tack property. The higher the flip-flop value is, the better orientation of aluminum is, and the better the anti-after-tack property is. A value of 87 or more is regarded as acceptable.

$$\text{Flip-flop value} = \text{L value at acceptance angle of } 15° - \text{L value at acceptance angle of } 110°.$$

Table 4

|  | Example | | | | | |
|---|---|---|---|---|---|---|
|  | 1 | 2 | 3 | 4 | 5 | 6 |
| High-solid-content coating composition NO. | 1 | 2 | 3 | 4 | 5 | 6 |

(continued)

| | | | Example | | | | | |
|---|---|---|---|---|---|---|---|---|
| | | | 1 | 2 | 3 | 4 | 5 | 6 |
| Hydroxy group-containing acrylic resin (A) | Hydroxy group-containing acrylic resin (A) | Acrylic resin (A-1) | 50 | 45 | 45 | 43 | | |
| | | Acrylic resin (A-2) | | | | | 45 | 43 |
| | | Acrylic resin (A-3) | | | | | | |
| | | Acrylic resin (A-4) | | | | | | |
| | Hydroxy group-containing acrylic resin having alkoxysilyl group | Acrylic resin (A'-1) | | | | | | |
| Hydroxy group-containing acrylic resin (D) | | Acrylic resin (D-1) | | | | | | |
| | | Acrylic resin (D-2) | | | | | | |
| | | Acrylic resin (D-3) | | | | | | |
| | | Acrylic resin (D-4) | | | | | | |
| | | Acrylic resin (D1-1) | | 5 | | 5 | | 5 |
| Hydroxy group-containing polyester resin (B) | | Polyester resin (B-1) | 8 | 8 | 8 | 5 | 8 | 5 |
| | | Polyester resin (B-2) | | | | | | |
| | | Polyester resin (B-3) | | | | | | |
| | | Polyester resin (B-4) | | | | | | |
| | | Polyester resin (B-5) | | | | | | |
| | | Polyester resin (B-6) | | | | | | |
| | | Polyester resin (B-7) | | | | | | |
| Hydroxy group-containing polyester resin (E) | | Polyester resin (E-1) | | | | | | |
| | | Polyester resin (E-2) | | | | | | |
| | | Polyester resin (E-3) | | | | | | |
| Polyisocyanate compound (C) | | "Sumidur N3300" | 42 | 42 | 42 | 42 | 42 | 42 |

**EP 4 230 310 A1**

(continued)

|  |  | Example | | | | | |
|---|---|---|---|---|---|---|---|
|  |  | 1 | 2 | 3 | 4 | 5 | 6 |
| Melamine resin | "U-VAN 20SE60" |  |  | 5 | 5 | 5 | 5 |
| Viscosity modifier | "SETALUX 61767 VX-60" | 0.3 | 0.3 | 0.3 | 0.3 | 0.3 | 0.3 |
| Surface conditioner | "BYK-300" | 0.2 | 0.2 | 0.2 | 0.2 | 0.2 | 0.2 |
| Solid content at the time of coating (%) | | 58% | 58% | 58% | 58% | 58% | 58% |
| Evaluation result | Tukon hardness | 11 | 11 | 11 | 12 | 11 | 11 |
|  | Scratch resistance | A | A | A | A | A | A |
|  | Water resistance | A | A | A | A | A | A |
|  | Finished appearance (LW) | 4 | 4 | 4 | 4 | 3 | 4 |
|  | Finished appearance (SW) | 14 | 14 | 14 | 14 | 15 | 15 |
|  | Anti-after-tack property (flip-flop value) | 88 | 91 | 88 | 91 | 87 | 90 |

Table 5

| | | | Example | | | | | |
|---|---|---|---|---|---|---|---|---|
| | | | 7 | 8 | 9 | 10 | 11 | 12 |
| High-solid-content coating composition NO. | | | 7 | 8 | 9 | 10 | 11 | 12 |
| Hydroxy group-containing acrylic resin (A) | Hydroxy group-containing acrylic resin (A) | Acrylic resin (A-1) |  |  |  | 20 | 45 | 45 |
|  |  | Acrylic resin (A-2) |  |  |  |  |  |  |
|  |  | Acrylic resin (A-3) | 45 |  |  |  |  |  |
|  |  | Acrylic resin (A-4) |  | 45 |  |  |  |  |
|  | Hydroxy group-containing acrylic resin (A') having alkoxysilyl group | Acrylic resin (A'-1) |  |  | 45 | 25 |  |  |

22

(continued)

| | | Example | | | | | |
|---|---|---|---|---|---|---|---|
| | | 7 | 8 | 9 | 10 | 11 | 12 |
| Hydroxy group-containing acrylic resin (D) | Acrylic resin (D-1) | | | | | | |
| | Acrylic resin (D-2) | | | | | | |
| | Acrylic resin (D-3) | | | | | | |
| | Acrylic resin (D-4) | | | | | | |
| | Acrylic resin (D1-1) | | | | | | |
| Hydroxy group-containing polyester resin (B) | Polyester resin (B-1) | 8 | 8 | 8 | 8 | | |
| | Polyester resin (B-2) | | | | | 8 | |
| | Polyester resin (B-3) | | | | | | 8 |
| | Polyester resin (B-4) | | | | | | |
| | Polyester resin (B-5) | | | | | | |
| | Polyester resin (B-6) | | | | | | |
| | Polyester resin (B-7) | | | | | | |
| Hydroxy group-containing polyester resin (E) | Polyester resin (E-1) | | | | | | |
| | Polyester resin (E-2) | | | | | | |
| | Polyester resin (E-3) | | | | | | |
| Polyisocyanate compound (C) | "Sumidur N3300" | 42 | 42 | 42 | 42 | 42 | 42 |
| Melamine resin | "U-VAN 20SE60" | 5 | 5 | 5 | 5 | 5 | 5 |
| Viscosity modifier | "SETALUX 61767 VX-60" | 0.3 | 0.3 | 0.3 | 0.3 | 0.3 | 0.3 |
| Surface conditioner | "BYK-300" | 0.2 | 0.2 | 0.2 | 0.2 | 0.2 | 0.2 |
| Solid content at the time of coating (%) | | 58% | 58% | 58% | 58% | 58% | 58% |

(continued)

| | | Example | | | | | |
|---|---|---|---|---|---|---|---|
| | | 7 | 8 | 9 | 10 | 11 | 12 |
| Evaluation result | Tukon hardness | 10 | 13 | 12 | 11 | 11 | 11 |
| | Scratch resistance | A | B | A | A | A | A |
| | Water resistance | A | A | A | A | A | A |
| | Finished appearance (LW) | 4 | 6 | 5 | 4 | 5 | 5 |
| | Finished appearance (SW) | 15 | 17 | 14 | 15 | 15 | 16 |
| | Anti-after-tack property (flip-flop value) | 87 | 89 | 88 | 88 | 89 | 91 |

Table 6

| | | | Example | | | | | |
|---|---|---|---|---|---|---|---|---|
| | | | 13 | 14 | 15 | 16 | 17 | 18 |
| High-solid-content coating composition NO. | | | 13 | 14 | 15 | 16 | 17 | 18 |
| Hydroxy group-containing acrylic resin (A) | Hydroxy group-containing acrylic resin (A) | Acrylic resin (A-1) | 43 | 45 | 45 | 43 | 45 | 45 |
| | | Acrylic resin (A-2) | | | | | | |
| | | Acrylic resin (A-3) | | | | | | |
| | | Acrylic resin (A-4) | | | | | | |
| | Hydroxy group-containing acrylic resin (A') having alkoxysilyl group | Acrylic resin (A'-1) | | | | | | |
| Hydroxy group-containing acrylic resin (D) | | Acrylic resin (D-1) | | | | | | |
| | | Acrylic resin (D-2) | | | | | | |
| | | Acrylic resin (D-3) | | | | | | |
| | | Acrylic resin (D-4) | | | | | | |
| | | Acrylic resin (D1-1) | 5 | | | | 5 | |

(continued)

| | | Example | | | | | |
|---|---|---|---|---|---|---|---|
| | | 13 | 14 | 15 | 16 | 17 | 18 |
| Hydroxy group-containing polyester resin (B) | Polyester resin (B-1) | | | | | | |
| | Polyester resin (B-2) | | | | | | |
| | Polyester resin (B-3) | 5 | | | | | |
| | Polyester resin (B-4) | | 8 | | | | |
| | Polyester resin (B-5) | | | 8 | 5 | | |
| | Polyester resin (B-6) | | | | | 8 | |
| | Polyester resin (B-7) | | | | | | 8 |
| Hydroxy group-containing polyester resin (E) | Polyester resin (E-1) | | | | | | |
| | Polyester resin (E-2) | | | | | | |
| | Polyester resin (E-3) | | | | | | |
| Polyisocyanate compound (C) | "Sumidur N3300" | 42 | 42 | 42 | 42 | 42 | 42 |
| Melamine resin | "U-VAN 20SE60" | 5 | 5 | 5 | 5 | 5 | 5 |
| Viscosity modifier | "SETALUX 61767 VX-60" | 0.3 | 0.3 | 0.3 | 0.3 | 0.3 | 0.3 |
| Surface conditioner | "BYK-300" | 0.2 | 0.2 | 0.2 | 0.2 | 0.2 | 0.2 |
| Solid content at the time of coating (%) | | 58% | 58% | 58% | 58% | 58% | 58% |
| Evaluation result | Tukon hardness | 11 | 11 | 11 | 12 | 11 | 11 |
| | Scratch resistance | A | A | A | A | A | A |
| | Water resistance | A | A | A | A | A | A |
| | Finished appearance (LW) | 6 | 5 | 5 | 5 | 4 | 5 |
| | Finished appearance (SW) | 17 | 15 | 15 | 15 | 15 | 14 |
| | Anti-after-tack property (flip-flop value) | 92 | 88 | 88 | 91 | 88 | 88 |

Table 7

| | | | Comparative Example | | | | |
|---|---|---|---|---|---|---|---|
| | | | 1 | 2 | 3 | 4 | 5 |
| High-solid-content coating composition NO. | | | 19 | 20 | 21 | 22 | 23 |
| Hydroxy group-containing acrylic resin (A) | Hydroxy group-containing acrylic resin (A) | Acrylic resin (A-1) | | | | | |
| | | Acrylic resin (A-2) | | | | | |
| | | Acrylic resin (A-3) | | | | | |
| | | Acrylic resin (A-4) | | | | | |
| | Hydroxy group-containing acrylic resin (A') having alkoxysilyl group | Acrylic resin (A'-1) | | | | | |
| Hydroxy group-containing acrylic resin (D) | | Acrylic resin (D-1) | 45 | | | | |
| | | Acrylic resin (D-2) | | 45 | | | |
| | | Acrylic resin (D-3) | | | 45 | | |
| | | Acrylic resin (D-4) | | | | 45 | |
| | | Acrylic resin (D1-1) | | | | | 45 |
| Hydroxy group-containing polyester resin (B) | | Polyester resin (B-1) | 8 | 8 | 8 | 8 | 8 |
| | | Polyester resin (B-2) | | | | | |
| | | Polyester resin (B-3) | | | | | |
| | | Polyester resin (B-4) | | | | | |
| | | Polyester resin (B-5) | | | | | |
| | | Polyester resin (B-6) | | | | | |
| | | Polyester resin (B-7) | | | | | |
| Hydroxy group-containing polyester resin (E) | | Polyester resin (E-1) | | | | | |
| | | Polyester resin (E-2) | | | | | |
| | | Polyester resin (E-3) | | | | | |
| Polyisocyanate compound (C) | | "Sumidur N3300" | 42 | 42 | 42 | 42 | 42 |
| Melamine resin | | "U-VAN 20SE60" | 5 | 5 | 5 | 5 | 5 |
| Viscosity modifier | | "SETALUX 61767 VX-60" | 0.3 | 0.3 | 0.3 | 0.3 | 0.3 |
| Surface conditioner | | "BYK-300" | 0.2 | 0.2 | 0.2 | 0.2 | 0.2 |
| Solid content at the time of coating (%) | | | 58% | 58% | 58% | 58% | 58% |

(continued)

| | | | Comparative Example | | | | |
|---|---|---|---|---|---|---|---|
| | | | 1 | 2 | 3 | 4 | 5 |
| Evaluation result | | Tukon hardness | 12 | 10 | 9 | 13 | 8 |
| | | Scratch resistance | A | B | A | B | A |
| | | Water resistance | A | B | B | A | B |
| | | Finished appearance (LW) | 8 | 4 | 4 | 7 | 6 |
| | | Finished appearance (SW) | 19 | 13 | 14 | 18 | 18 |
| | | Anti-after-tack property (flip-flop value) | 86 | 84 | 85 | 86 | 93 |

Table 8

| | | | Comparative Example | | | |
|---|---|---|---|---|---|---|
| | | | 6 | 7 | 8 | 9 |
| High-solid-content coating composition NO. | | | 24 | 25 | 26 | 27 |
| Hydroxy group-containing acrylic resin (A) | Hydroxy group-containing acrylic resin (A) | Acrylic resin (A-1) | 45 | 45 | 45 | 45 |
| | | Acrylic resin (A-2) | | | | |
| | | Acrylic resin (A-3) | | | | |
| | | Acrylic resin (A-4) | | | | |
| | Hydroxy group-containing acrylic resin (A') having alkoxysilyl group | Acrylic resin (A'-1) | | | | |
| Hydroxy group-containing acrylic resin (D) | | Acrylic resin (D-1) | | | | |
| | | Acrylic resin (D-2) | | | | |
| | | Acrylic resin (D-3) | | | | |
| | | Acrylic resin (D-4) | | | | |
| | | Acrylic resin (D1-1) | | | | |
| Hydroxy group-containing polyester resin (B) | | Polyester resin (B-1) | | | | |
| | | Polyester resin (B-2) | | | | |
| | | Polyester resin (B-3) | | | | |
| | | Polyester resin (B-4) | | | | |
| | | Polyester resin (B-5) | | | | |
| | | Polyester resin (B-6) | | | | |
| | | Polyester resin (B-7) | | | | |
| Hydroxy group-containing polyester resin (E) | | Polyester resin (E-1) | 8 | | | |
| | | Polyester resin (E-2) | | 8 | | |
| | | Polyester resin (E-3) | | | 8 | 8 |
| Polyisocyanate compound (C) | | "Sumidur N3300" | 42 | 42 | 42 | 42 |

(continued)

| | | Comparative Example | | | |
|---|---|---|---|---|---|
| | | 6 | 7 | 8 | 9 |
| Melamine resin | "U-VAN 20SE60" | 5 | 5 | 5 | 5 |
| Viscosity modifier | "SETALUX 61767 VX-60" | 0.3 | 0.3 | 0.3 | 0.3 |
| Surface conditioner | "BYK-300" | 0.2 | 0.2 | 0.2 | 0.2 |
| Solid content at the time of coating (%) | | 58% | 58% | 58% | 45% |
| Evaluation result | Tukon hardness | 11 | 11 | 11 | 11 |
| | Scratch resistance | A | B | A | A |
| | Water resistance | A | A | A | A |
| | Finished appearance (LW) | 8 | 9 | 11 | 5 |
| | Finished appearance (SW) | 19 | 20 | 21 | 15 |
| | Anti-after-tack property (flip-flop value) | 85 | 85 | 86 | 87 |

Although the embodiment and examples of the present invention have been specifically described above, the present invention is not limited to the above embodiment, and various modifications can be made based on the technical idea of the present invention.

For example, the configurations, methods, processes, shapes, materials, numerical values, and the like described in the above embodiment and Examples are merely examples, and configurations, methods, processes, shapes, materials, numerical values, and the like different from those described above may be used as necessary.

The configurations, methods, processes, shapes, materials, numerical values, and the like in the above embodiment can be combined with each other without departing from the gist of the present invention.

The present application is based on Japanese Patent Application No. 2020-191307 filed on November 18, 2020, and Japanese Patent Application No. 2021-066840 filed on April 12, 2021, contents of which are incorporated herein by reference.

**Claims**

1.   A high-solid-content coating composition, comprising:

(A) a hydroxy group-containing acrylic resin having a glass transition temperature (Tg) in a range of 20°C to 70°C and a weight average molecular weight in a range of 3,000 to 10,000;
(B) a hydroxy group-containing polyester resin being a reaction product of a polyfunctional compound (b-1) having a carboxy group and a hydroxy group in total of three or more in one molecule, a monoepoxide compound (b-2) having a hydrocarbon group having 4 or more carbon atoms, and a caprolactone compound (b-3); and
(C) a polyisocyanate compound, wherein

a solid content at the time of coating is 50 mass% or more.

2.   The high-solid-content coating composition according to claim 1, wherein the hydroxy group-containing acrylic resin (A) comprises a hydroxy group-containing acrylic resin (A') having an alkoxysilyl group.

3.   The high-solid-content coating composition according to claim 1 or 2, wherein an acid value of the hydroxy group-containing polyester resin (B) is 30 mgKOH/g or less.

4. The high-solid-content coating composition according to any one of claims 1 to 3, wherein the polyfunctional compound (b-1) having a carboxy group and a hydroxy group in total of three or more is a compound having one carboxy group and two hydroxy groups.

5. The high-solid-content coating composition according to any one of claims 1 to 4, wherein the hydroxy group-containing polyester resin (B) further comprises a polybasic acid compound (b-4) as a reaction component.

6. A method for forming a multilayer coating film, the method comprising:

a step (1): coating an object to be coated with an intermediate coating composition to form an intermediate coating film;
a step (2): coating the intermediate coating film formed in the step (1) with a basecoat coating composition to form a basecoat coating film;
a step (3): coating the basecoat coating film formed in the step (2) with the high-solid-content coating composition according to any one of claims 1 to 5 to form a clearcoat coating film; and
a step (4): heating and curing the intermediate coating film, the basecoat coating film, and the clearcoat coating film formed in the steps (1) to (3) at once.

**INTERNATIONAL SEARCH REPORT**

International application No.

**PCT/JP2021/042432**

**A. CLASSIFICATION OF SUBJECT MATTER**

*B05D 1/36*(2006.01)i; *B05D 3/02*(2006.01)i; *B05D 7/24*(2006.01)i; *B32B 27/30*(2006.01)i; *B32B 27/36*(2006.01)i; *B32B 27/40*(2006.01)i; *C09D 5/00*(2006.01)i; *C09D 133/00*(2006.01)i; *C09D 133/14*(2006.01)i; *C09D 167/04*(2006.01)i; *C09D 175/04*(2006.01)i; *C09D 175/06*(2006.01)i; *C08G 18/40*(2006.01)i; *C08G 18/42*(2006.01)i; *C08G 18/62*(2006.01)i

FI: C09D167/04; C09D175/06; B32B27/30 A; B32B27/36; B32B27/40; B05D1/36 B; B05D3/02 Z; C08G18/40 063; C08G18/42 069; C08G18/62 016; C09D133/00; C09D5/00 D; B05D7/24 302P; C09D175/04; C09D133/14

According to International Patent Classification (IPC) or to both national classification and IPC

**B. FIELDS SEARCHED**

Minimum documentation searched (classification system followed by classification symbols)

B05D1/36; B05D3/02; B05D7/24; B32B27/30; B32B27/36; B32B27/40; C09D5/00; C09D133/00; C09D133/14; C09D167/04; C09D175/04; C09D175/06; C08G18/40; C08G18/42; C08G18/62

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 10-231454 A (NIPPON PAINT CO., LTD.) 02 September 1998 (1998-09-02) claims, paragraphs [0007], [0008], [0011], [0012], [0014]-[0026], [0031]-[0038], [0041]-[0043], [0046], examples | 1, 3, 5-6 |
| A | JP 6-136224 A (DAINIPPON INK & CHEMICALS INC.) 17 May 1994 (1994-05-17) entire text | 1-6 |
| A | JP 62-212469 A (NIPPON PAINT CO., LTD.) 18 September 1987 (1987-09-18) entire text | 1-6 |
| A | JP 2008-178867 A (KANSAI PAINT CO., LTD.) 07 August 2008 (2008-08-07) entire text | 1-6 |
| A | JP 9-108619 A (MAZDA MOTOR CORP.) 28 April 1997 (1997-04-28) entire text | 1-6 |

☐ Further documents are listed in the continuation of Box C.     ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **28 January 2022** | **08 February 2022** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (January 2015)

**INTERNATIONAL SEARCH REPORT**
Information on patent family members

International application No.

**PCT/JP2021/042432**

| Patent document cited in search report | | | Publication date (day/month/year) | Patent family member(s) | | | Publication date (day/month/year) |
|---|---|---|---|---|---|---|---|
| JP | 10-231454 | A | 02 September 1998 | (Family: none) | | | |
| JP | 6-136224 | A | 17 May 1994 | US entire text | 5705567 | A | |
| JP | 62-212469 | A | 18 September 1987 | US entire text EP KR 10-1987-0008981 | 4810758 237351 | A A2 A | |
| JP | 2008-178867 | A | 07 August 2008 | CN entire text | 101209446 | A | |
| JP | 9-108619 | A | 28 April 1997 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002201430 A
- JP 2002020682 A
- JP 2020191307 A
- JP 2021066840 A